# EUROPEAN PATENT SPECIFICATION

(11) **EP 4 203 162 B1**
(45) Date of publication and mention of the grant of the patent: **25.11.2026**
(21) Application number: 22775993.3
(22) Date of filing: 18.03.2022
(51) Int. Cl.: H01M 50/358, B01D 46/10, H01M 10/613, H01M 50/30, H01M 50/211, H01M 50/308, H01M 50/367, H01M 50/383, H01M 50/392

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 22.03.2021 KR 20210036924; 28.04.2021 KR 20210054815; 14.03.2022 KR 20220031636
(43) Date of publication of application: 28.06.2023
(73) Proprietor: LG Energy Solution, Ltd., Seoul 07335 (KR)
(72) Inventor: JANG, Sunghwan, Daejeon 34122 (KR); SEONG, Junyeob, Daejeon 34122 (KR); PARK, Won Kyoung, Daejeon 34122 (KR); JUNG, Hyemi, Daejeon 34122 (KR); PARK, Subin, Daejeon 34122 (KR); KIM, Kwangmo, Daejeon 34122 (KR)
(74) Representative: Goddar, Heinz J.
(86) International application number: PCT/KR2022/003809
(87) International publication number: WO 2022/203291

(56) References cited:
- WO-A1-2020/003800
- JP-B2- 5 939 307
- KR-A- 20150 069 732
- KR-A- 20180 018 113
- KR-A- 20190 036 260
- KR-A- 20190 069 131
- KR-A- 20200 107 213
- KR-A- 20200 143 977
- KR-A- 20210 004 189

## Description

### [TECHNICAL FIELD]

### Cross Citation with Related Application(s)

This application claims the benefit of Korean Patent Application No. 10-2021-0036924 filed on March 22, 2021, Korean Patent Application No. 10-2021-0054815 filed on April 28, 2021 and Korean Patent Application No. 10-2022-0031636 filed on March 14, 2022 in the Korean Intellectual Property Office.

The present disclosure relates to a battery module and a battery pack including the same, and more particularly, to a battery module having enhanced safety, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, a chargeable/dischargeable secondary battery is used as a power source for an electric vehicle (EV), a hybrid electric vehicle (HEV), a plug-in hybrid electric vehicle (P-HEV) and the like, as a part of a method of solving air pollution and the like caused by existing gasoline vehicles using fossil fuel. Therefore, the need for developing the secondary battery has been increasing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which multiple battery cells are electrically connected is used. In such a battery module, multiple battery cells are connected to each other in series or parallel to form a cell assembly, thereby improving capacity and output. One or more battery modules can be mounted together with various control and protection systems such as a BMS (battery management system) and a cooling system to form a battery pack.

KR 2020/0107213 A discloses a battery module having a structure capable of discharging gas generated from a deteriorated battery cell to the outside while preventing external exposure of a flame.

KR 2019/0069131 A discloses a battery module having a structure capable of discharging gas generated from a deteriorated battery cell to the outside.

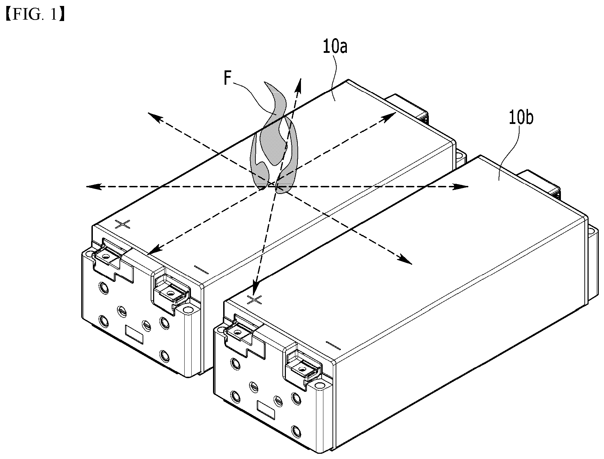

Fig. 1 is a perspective view of conventional battery modules.

Referring to Fig. 1, battery modules 10a and 10b including multiple battery cells may be gathered and mounted on middle or large-sized devices such as automobiles. In the battery modules 10a and 10b configured to gather multiple battery cells, or the battery pack configured to gather multiple battery modules 10a and 10b, heat generated from multiple battery cells can be added up in a narrow space, so that the temperature can rise more quickly and excessively. In other words, battery modules 10a and 10b in which multiple battery cells are stacked, and the battery pack mounted with multiple battery modules 10a and 10b can obtain high output, but it is not easy to remove heat generated from the battery cells during charging and discharging. When the heat dissipation of battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules 10a and 10b are concentratedly arranged to increase the mileage of the vehicle, a flame or heat generated in any one battery module 10a can easily propagate to an adjacent battery module 10b, which may eventually lead to ignition or explosion of the battery pack itself.

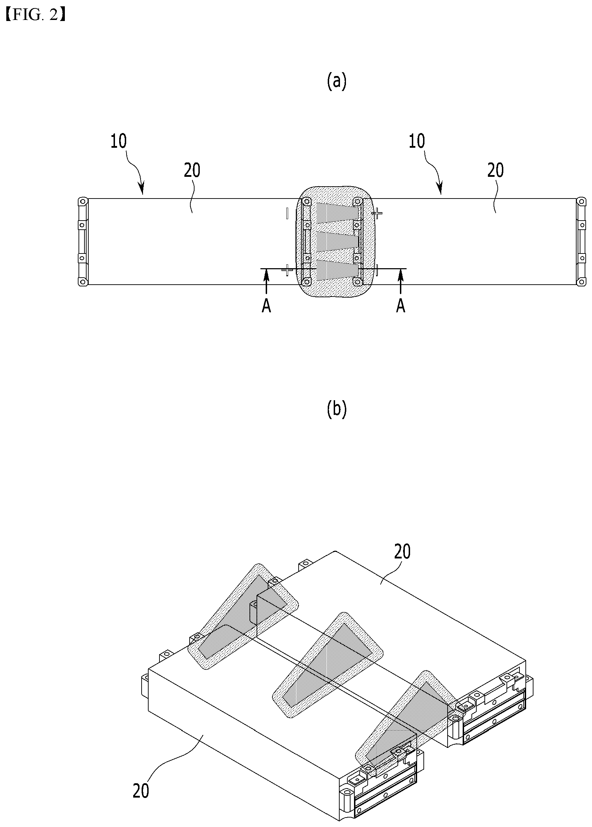

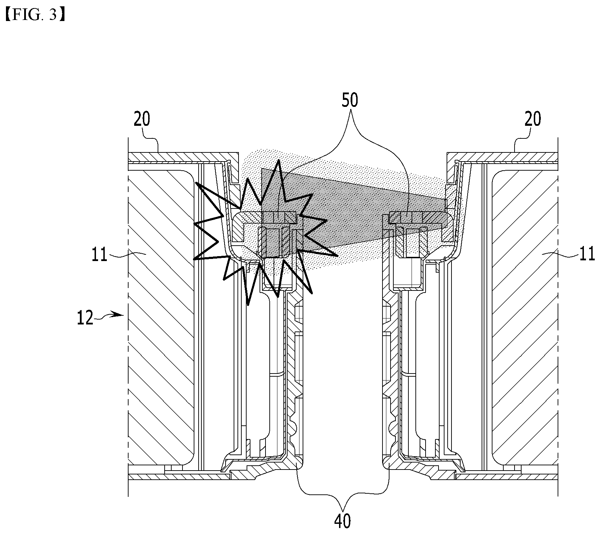

Figs. 2(a) and (b) are diagrams showing the appearance at the time of ignition of a battery module mounted on a conventional battery pack. Fig. 3 shows a section A-A of Fig. 2(a), which is a cross-sectional view showing the appearance of a flame that affects adjacent battery modules at the time of ignition of a battery module mounted on a conventional battery pack.

Referring to Figs. 2 and 3, the conventional battery module 10 includes a battery cell stack 12 in which a plurality of battery cells 11 are stacked, a module frame 20 that houses the battery cell stack 12, end plates 40 that are formed on the front and rear surfaces of the battery cell stack 12, a terminal busbar 50 formed so as to protrude out of the end plate, and the like.

The battery cell stack 12 may be located in a structure sealed by coupling the frame 20 and the end plate 40. Consequently, when the internal pressure of the battery cell 11 increases due to overcharging or the like, high-temperature heat, gas, or flame may be discharged to the outside of the battery cell 11, wherein the heat, gas, flame or the like discharged from one battery cell 11 may be transferred to other adjacent battery cells 11 at a narrow interval to induce a continuous ignition phenomenon. Additionally, the heat, gas, flame or the like discharged from each battery cell 11 may be discharged toward an opening formed in the end plate 40. In this process, there may be a problem that a busbar 50 or the like located between the end plate 40 and the battery cell 11 is damaged.

Moreover, the plurality of battery modules 10 within the battery pack are arranged such that at least two end plates 40 face each other. Thus, when the heat, gas, flame or the like generated within the battery module 10 is discharged to the outside of the battery module 10, it may affect the performance and stability of the plurality of battery cells 11 within other adjacent battery modules 10.

Therefore, there is a need to design a battery module that can block flame propagation and prevent heat, gas or flame generated inside the battery module from being discharged to adjacent battery modules, thereby preventing continuous thermal runaway phenomenon.

### [DETAILED DESCRIPTION OF THE INVENTION]

### [Technical Problem]

It is an object of the present disclosure to provide a battery module that can control propagation of flame generated therein to the outside, and prevent continuous thermal runaway phenomenon, thereby having improved durability and safety, and a battery pack including the same.

However, the problem to be solved by embodiments of the present disclosure is not limited to the above-described problems, and can be variously expanded within the scope of the technical idea included in the present disclosure.

### [Technical Solution]

The present invention is defined according to the subject matter of the appended independent claims. Particular embodiments are given by the additional features of the appended dependent claims.

According to an aspect of the present disclosure, there is provided a battery module comprising: a battery cell stack in which a plurality of battery cells are stacked; a module frame that houses the battery cell stack; and a first end plate and a second end plate each covering a front surface and a rear surface of the battery cell stack, wherein a venting hole is formed in at least one of the module frame, the first end plate or the second end plate, wherein a venting unit for guiding a discharge path of gas or flame discharged from the venting hole is located on one surface of the module frame, and the venting unit is mounted so as to cover the venting hole.

An internal passage of the venting unit may be connected to the venting hole, and an outlet port connected with the internal passage may be formed on one side of the venting unit.

The venting unit may be a frame in the form wherein one side in the direction of the one surface of the module frame is opened.

The venting unit may extend along the one surface of the module frame from the first end plate to the second end plate.

The venting hole may be formed in both the first end plate and the second end plate, and an internal passage of the venting unit may be connected with both the venting hole of the first end plate and the venting hole of the second end plate.

Within the venting unit, the discharge path of gas or flame may extend while being bent at a plurality of portions.

The venting unit includes at least one partition portion forming the discharge path of gas or flame, and the one surface of the partition portion may be perpendicular to one surface of the venting unit.
the battery cells may include electrode leads, one of the electrode leads may protrude toward the first end plate, and the other of the electrode leads may protrude toward the second end plate.

The venting unit may include an outlet port for discharging the gas or flame to the outside. The venting hole and the outlet port may be located in mutually opposite directions with respect to the center of the module frame. The center of the module frame may be a point that is spaced apart from the first end plate and the second end plate by the same distance.

The venting unit may include an outlet port for discharging the gas or flame to the outside. The gas or flame discharged along a first discharge direction from the venting hole may move along a second discharge direction different from the first discharge direction through the internal passage of the venting unit. The second discharge direction may be a direction toward the outlet port.

A filter may be arranged inside the venting unit.

The venting unit may include a first filter and a second filter located therein. The first filter and the second filter may be disposed at intervals on a discharge path guided by an internal passage of the venting unit. A pore size of the first filter and a pore size of the second filter may be different from each other.

The venting unit is coupled to the module frame in a sliding manner.

The module frame may include a slot connected to the venting unit. The slot is formed extending along the longitudinal direction of the module frame, and the venting unit is slidable along the slot.

The venting unit may include a protrusion coupled with the slot.

The venting unit may include a first venting unit and a second venting unit. The discharge path guided by the first venting unit and the discharge path guided by the second venting unit may be in mutually opposite directions.

According to another embodiment of the present disclosure, there is provided a battery pack comprising the above-mentioned battery module.

### [Advantageous Effects]

According to the embodiments of the present disclosure, a separate flame discharge path is provided in the battery module, so that even if flame occurs inside the battery module, it can block from propagating to the outside. It is possible to suppress or delay propagation of a flame generated in one of the battery modules to other battery modules or other electrical components. That is, it is possible to increase the safety of the battery module and the battery pack against the occurrence of fire.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of conventional battery modules;
Figs. 2(a) and (b) are diagrams showing the appearance at the time of ignition of a battery module mounted on a conventional battery pack;
Fig. 3 shows a section A-A of Fig. 2(a), which is a cross-sectional view showing the appearance of a flame that affects adjacent battery modules at the time of ignition of a battery module mounted on a conventional battery pack;
Fig. 4 is a perspective view showing a battery module according to one embodiment of the present disclosure;
Fig. 5 is an exploded perspective view of the battery module of Fig. 4;
Fig. 6 is a perspective view showing one of the battery cells included in the battery module of Fig. 5;
Fig. 7 is a perspective view of a first end plate and a second end plate included in the battery module of Fig. 5;
Fig. 8 is a perspective view showing venting units included in the battery module of Fig. 5;
Fig. 9 is a plan view of the battery module of Fig. 4 as viewed along the x-axis direction on the yz plane;
Fig. 10 is a perspective view showing a venting unit according to a modified embodiment of the present disclosure;
Fig. 11 is a perspective view showing a heat sink included in the battery module of Fig. 5;
Fig. 12 is a perspective view showing a lower frame, a first thermal conductive resin layer, and a second thermal conductive resin layer included in the battery module of Fig. 5;
Fig. 13 is a perspective view showing a battery pack according to one embodiment of the present disclosure;
Fig. 14 is a perspective view showing a battery module according to another embodiment of the present disclosure;
Fig. 15 is an exploded perspective view of the battery module of Fig. 14;
Fig. 16 is a perspective view of one of the battery cells included in the battery module of Fig. 15;
Fig. 17 is a diagram for explaining a gas discharge path when a flame occurs in a battery module according to one embodiment of the present disclosure;
Fig. 18 is a plan view of the battery module of Fig. 17 as viewed from above;
Fig. 19 is a perspective view showing a modification of a battery module according to one embodiment of the present disclosure;
Fig. 20 is a plan view of the battery module of Fig. 19 as viewed from above;
Figs. 21 and 22 are perspective views of an example of a venting unit according to one embodiment of the present disclosure;
Fig. 23 is a diagram for explaining one coupling method of a vent unit according to one embodiment of the present disclosure; and
Fig. 24 is a cross-sectional view taken along the line B-B of Fig. 23.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

The battery module 100a according to one embodiment of the present disclosure will be described below.

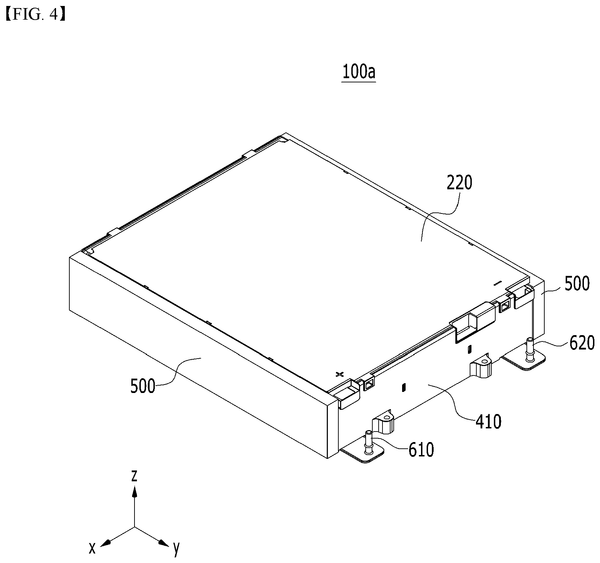

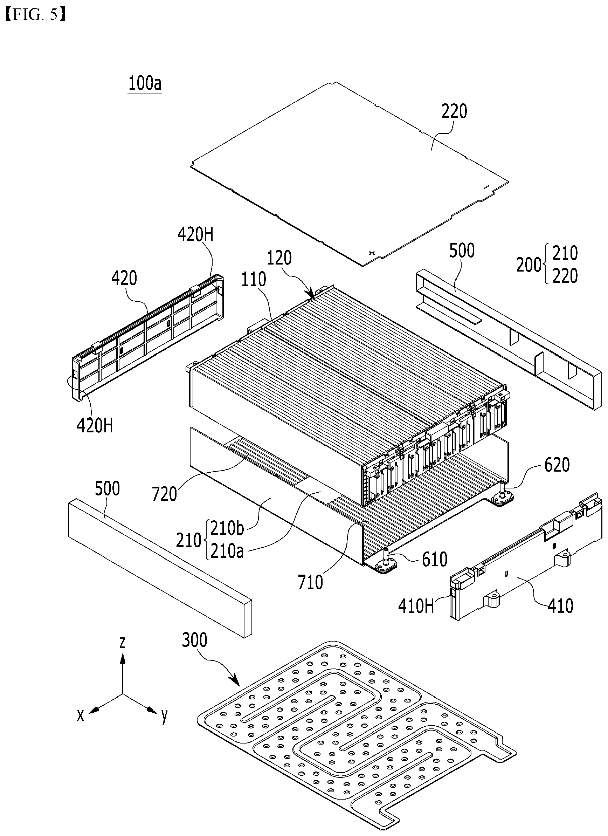

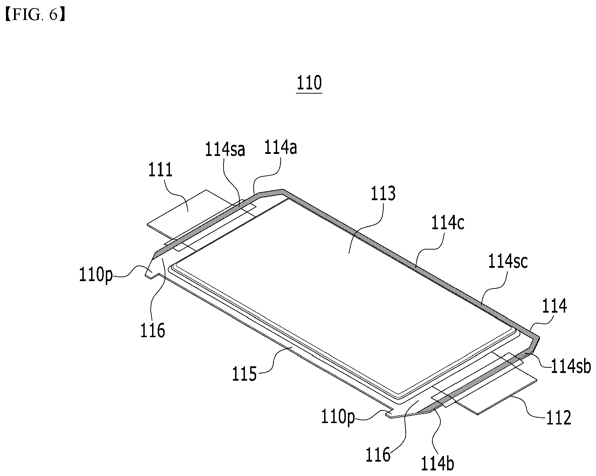

Fig. 4 is a perspective view showing a battery module according to one embodiment of the present disclosure. Fig. 5 is an exploded perspective view of the battery module of Fig. 4. Fig. 6 is a perspective view showing one of the battery cells included in the battery module of Fig. 5.

Referring to Figs. 4 to 6, a battery module 100a according to one embodiment of the present disclosure includes a battery cell stack 120 in which a plurality of battery cells 110 are stacked; a module frame 200 that houses the battery cell stack 120; and a first end plate 410 and a second end plate 420 each covering a front surface and a rear surface of the battery cell stack 120.

At this time, the venting holes 410H and 420H are formed in at least one of the module frame 200, the first end plate 410 and the second end plate 420. In the case of the battery module 100a according to the present embodiment, the venting holes 410H and 420H may be formed in at least one of the first end plate 410 and the second end plate 420.

A venting unit 500 for guiding a discharge path of gas or flame discharged from the venting holes 410H and 420H is located on one surface of the module frame 200. The venting unit 500 is mounted so as to cover the venting holes 410H and 420H.

First, the battery cell 110 is preferably a pouch-type battery cell, and can be formed in a rectangular sheet-like structure. For example, the battery cell 110 according to the present embodiment has a structure in which two electrode leads 111 and 112 face each other and protrude from one end 114a and the other end 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both ends 114a and 114b of a cell case 114 and one side portion 114c connecting them in a state in which an electrode assembly (not shown) is housed in a cell case 114. In other words, the battery cell 110 according to the present embodiment has a total of three sealing portions 114sa, 114sb and 114sc, wherein the sealing portions 114sa, 114sb and 114sc have a structure that is sealed by a method such as heat-sealing, and the remaining other side portion may be composed of a connection portion 115. The cell case 114 may be composed of a laminated sheet including a resin layer and a metal layer.

Additionally, the connection portion 115 may extend long along one edge of the battery cell 110, and a bat-ear 110p may be formed at an end of the connection portion 115. Further, while the cell case 114 is sealed with the protruding electrode leads 111 and 112 being interposed therebetween, a terrace portion 116 may be formed between the electrode leads 111 and 112 and the cell main body 113. That is, the battery cell 110 may include a terrace portion 116 formed extending from the cell case 114 in the direction in which the electrode leads 111 and 112 protrude.

Such a battery cell 110 may be composed by a plurality of numbers, and the plurality of battery cells 110 may be stacked so as to be electrically connected to each other, thereby forming a battery cell stack 120. Particularly, as shown in Fig. 5, a plurality of battery cells 110 may be stacked along the direction parallel to the x-axis. Thereby, the electrode leads 111 and 112 of the battery cells 110 may protrude in the y-axis direction and the -y-axis direction, respectively. Although not specifically shown in the figure, an adhesive member may be located between the battery cells 110. Thereby, the battery cells 110 may be joined to each other to form a battery cell stack 120.

The battery cell stack 120 according to the present embodiment may be a large-area module in which the number of battery cells 110 is increased compared to a conventional case. Specifically, 32 to 48 battery cells 110 may be included per battery module 100a. In the case of such a large-area module, the length in a horizontal direction of the battery module becomes long. Here, the length in a horizontal direction may mean a length in the direction in which the battery cells 110 are stacked, that is, in a direction parallel to the x-axis.

Meanwhile, when charge and discharge of the battery cells 110 are repeatedly performed, heat is generated. Even among them, a great amount of heat generates in a portion adjacent to the electrode leads 111 and 112. That is, as it approaches to the terrace portion116 rather than the central portion of the cell main body 113, more heat is generated during charging and discharging.

The module frame 200 may include a lower frame 210 that covers the lower surface and both side surfaces of the battery cell stack 120, and an upper cover 220 that covers the upper surface of the battery cell stack 120.

The lower frame 210 can cover the lower surface and both side surfaces of the battery cell stack 120. Specifically, the lower frame 210 may include a bottom portion 210a and two side surface portions 210b extending upward from both ends of the bottom portion 210a. The bottom portion 210a may cover the lower surface of the battery cell stack 120, and the two side surface portions 210b may cover both side surfaces of the battery cell stack 120. Here, the lower surface of the battery cell stack 120 refers to a surface in the -z-axis direction, and both side surfaces of the battery cell stack 120 refer to surfaces in the x-axis and -x-axis directions. However, these are surfaces mentioned for convenience of explanation, and may vary depending on the position of a target object or the position of an observer.

The upper cover 220 covers the upper surface of the battery cell stack 120. Here, the upper surface of the battery cell stack 120 refers to a surface in the z-axis direction. The upper cover 220 and the lower frame 210 can be joined by welding or the like in a state in which the mutually corresponding corner portions are in contact, thereby forming a structure that covers the battery cell stack 120 vertically and horizontally. It is possible to physically protect the battery cell stack 120 through the upper cover 220 and the lower frame 210.

As described above, the first end plate 410 may cover the front surface of the battery cell stack 120, and the second end plate 420 may cover the rear surface of the battery cell stack 120. Here, the front surface of the battery cell stack 120 refers to a surface in the y-axis direction, and the rear surface of the battery cell stack 120 refers to a surface in the -y-axis direction.

The first end plate 410 and the second end plate 420 may be formed so that they are located on the opened both sides of the module frame 200 to cover the battery cell stack 120. Each of the first end plate 410 and the second end plate 420 may be joined by welding in a state where the corresponding corners of the module frame 200 are in contact with each other. The first end plate 410 and the second end plate 420 can physically protect the battery cell stack 120 and other electrical components from external impact.

Meanwhile, although not specifically shown in the figure, a busbar frame to which the busbar is mounted and an insulating cover for electrical insulation, and the like may be located between the battery cell stack 120 and the end plates 410 and 420.

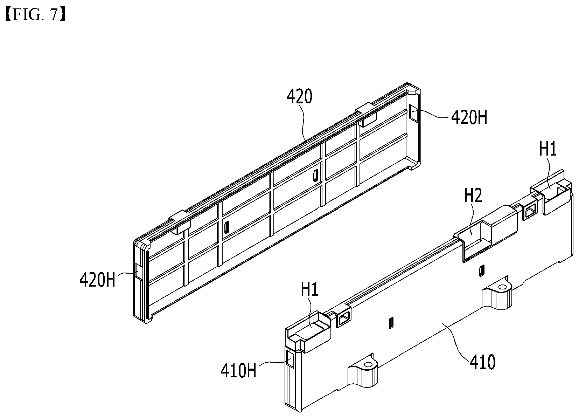

Next, the end plate and the venting unit according to the present embodiment will be described in detail with reference to Figs. 7 to 9 and the like.

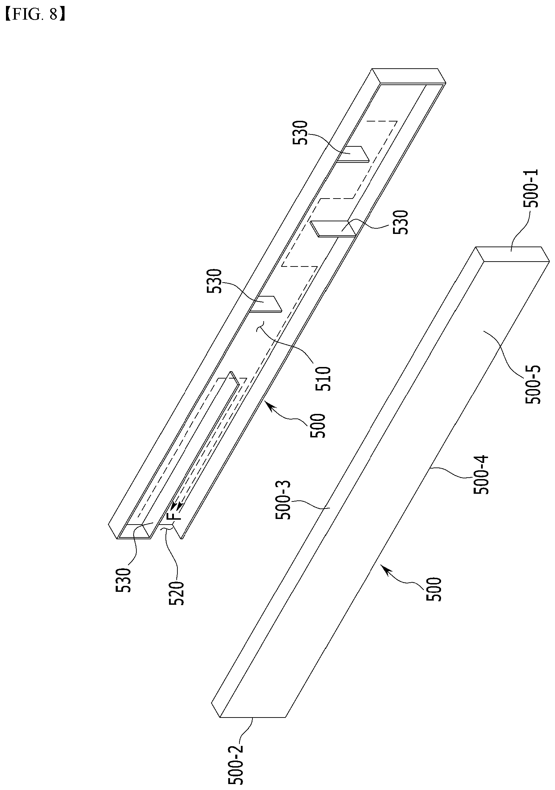

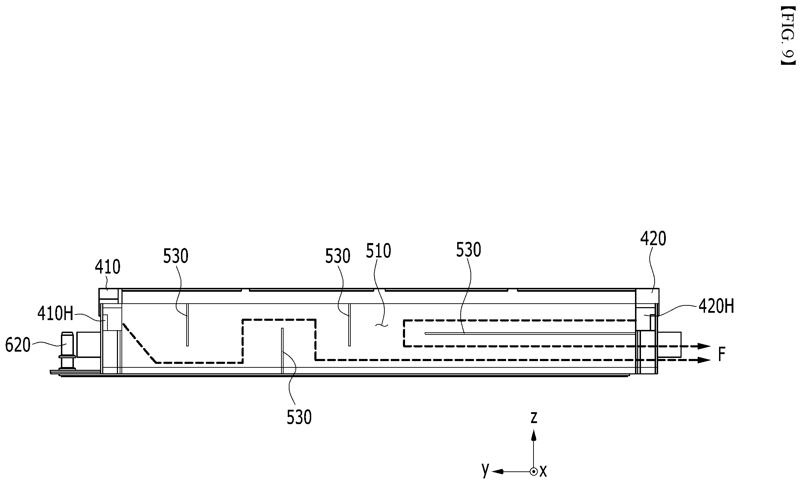

Fig. 7 is a perspective view of a first end plate and a second end plate included in the battery module of Fig. 5. Fig. 8 is a perspective view showing venting units included in the battery module of Fig. 5. Fig. 9 is a plan view of the battery module of Fig. 4 as viewed along the x-axis direction on the yz plane.

Referring to Figs. 5 and 7 to 9, venting holes 410H and 420H are formed in at least one of the first end plate 410 and the second end plate 420 according to the present embodiment. Fig. 7 shows that the venting holes 410H and 420H are formed in both the first end plate 410 and the second end plate 420, but a venting hole may be formed in only one of them.

An internal passage 510 may be provided inside the venting unit 500 according to the present embodiment so that gas or flame generated inside the battery module can pass through. The internal passage 510 may be connected to the venting holes 410H and 420H, and an outlet port 520 connected to the internal passage 510 may be formed on one side of the venting unit 500. In the present embodiment, the internal passage 510 refers to a space provided inside the venting unit 500, and may mean a discharge path of gas or flame F.

Such a venting unit 500 may be located on one surface of the module frame. In one example, the venting unit 500 may be located on the outer surface of the side surface portion 210b of the module frame 200. More specifically, the venting unit 500 is composed of a plurality of units, and one venting unit 500 is located on the outer surface of one of the side surface portions 210b, and the other venting unit 500 may be located on the outer surface of the other of the side surface portions 210b. Although not specifically shown in the figure, in another embodiment, it is also possible that only one venting unit 500 can be located on the outer surface of any one side surface portion 210b.

Next, any one venting unit 500 will be mainly described.

The venting unit 500 according to the present embodiment is a member provided with an internal passage 510 through which gas or flame F can move. Since the venting unit 500 is mounted so as to cover the venting holes 410H and 420H, gas or flame F generated from the battery cell stack 120 or the like of the battery module 100a is flowed into the venting unit 500 through the venting holes 410H and 420H. The gas or flame F that has moved along the internal passage 510 is discharged to the outside through the outlet port 520.

The outlet port 520 is opened toward the outside of the battery module 100a. Specifically, the outlet port 520 may be formed on a front surface 500-1, a rear surface 500-2, an upper surface 500-3, or a lower surface 500-4 of the venting unit 500. In one example, Figs. 7 and 8 show that the outlet port 520 is formed on the rear surface 500-2 of the venting unit 500.

The venting unit 500 may include a front surface 500-1, a rear surface 500-2, an upper surface 500-3, a lower surface 500-4, and one side surface 500-5. Also, the venting unit 500 may be a frame in the form wherein one side in the direction of the one surface of the module frame 200 is opened. In one example, the venting unit 500 may be a frame in the form wherein one side in the direction of the side surface portion 210b of the module frame 200 is opened. That is, the side surface portion 210b may be located on the opened one side of the venting unit 500. The venting unit 500 is joined to the side surface portion 210b, so that a space between the venting unit 500 and the side surface portion 210b of the module frame 200 can be configured as an internal passage 510 through which gas or flame F moves. That is, a space surrounded by the front surface 500-1, the rear surface 500-2, the upper surface 500-3, the lower surface 500-4, and one side surface 500-5 of the venting unit 500 and the side surface portions 210 b of the module frame 200 may correspond to the internal passage 510 of the vent unit 500.

Meanwhile, the venting unit 500 according to the present embodiment may extend along the side surface portion 210b of the module frame 200. Specifically, the venting unit 500 may extend from the first end plate 410 to the second end plate 420 along one surface of the module frame 200. The venting unit 500 is designed to be long in this way, so that the length of the internal passage 510 provided therein can be extended to the maximum. Since sufficient air (oxygen) is not supplied while the flame F moves along the long path formed by the internal passage 510, flames F may be weakened or extinguished. That is, a kind of smothering extinguishment effect can be exhibited. Thereby, even if flame F occurs inside the battery module 100a, it is possible to suppress or delay the propagation of flame to other adjacent battery modules or other electrical components. Particularly, when the corresponding battery module 100a is included in the battery pack for vehicle, the propagation of flames F can be delayed, and a time margin for a driver to evacuate from a fire or explosion can be secured.

Meanwhile, according to one embodiment of the present disclosure, venting holes 410H and 420H may be formed in both the first end plate 410 and the second end plate 420. The venting unit 500 is mounted so as to cover all of these venting holes 410H and 420H, so that the internal passage 510 of the venting unit 500 can be connected with both the venting hole 410H of the first end plate 410 and the venting hole 420H of the second end plate 420. Thereby, as shown in Figs. 8 and 9, two flame (F) paths may be formed.

As described above, the first end plate 410 and the second end plate 420 may cover the front surface and the rear surface of the battery cell stack 120, respectively. At this time, the electrode leads 111 and 112 (see Fig. 6) of the battery cell 110 may be located on the front surface and the rear surface of the battery cell stack 120. That is, one of the electrode leads 111 and 112 of the battery cell 110 constituting the battery cell stack 120 protrudes toward the first end plate 410, and the other of the electrode leads 111 and 112 of the battery cell 110 may protrude toward the second end plate 420.

In the battery cell 110, the portion closer to the electrode leads 111 and 112 than the central portion of the cell body 113 generates more heat during charging and discharging. Based on the battery cell stack 120, more heat is generated in the portions adjacent to the protruding portions of the electrode leads 111 and 112. Thus, the venting holes 410H and 420H may be provided in both the first end plate 410 and the second end plate 420. That is, the venting holes 410H and 420H may be located adjacent to portions where the electrode leads 111 and 112 protrude. Venting holes 410H and 420H are provided adjacent to a portion where the largest amount of heat is generated in the battery cell stack 120, that is, a portion where a flame is highly likely to occur, and the internal passage 510 may be connected to both the venting holes 410H and 420H. As a result, it is possible to improve the discharge performance of gas and flame in the portion where a large amount of heat is generated, and thus further reduce the possibility of explosion or ignition of the battery module 100a.

Further, a terminal busbar opening H1 or a module connector opening H2 may be formed in the first end plate 410 or the second end plate 420. A terminal busbar (not shown) inside the battery module 100a may be exposed through the terminal busbar opening H1, and a module connector (not shown) may be exposed through the module connector opening H2. Conventionally, there was a problem that flame and heat generated inside the battery module 100a are discharged through a terminal busbar opening H1 or a module connector opening H2, thereby damaging mutually opposing battery modules or other electrical components. In the battery module 100a according to the present embodiment, since separate venting holes 410H and 420H for flame discharge are provided in the first end plate 410 or the second end plate 420, flame and heat discharged through the terminal busbar opening H1 or the module connector opening H2 may be dissipated. Thus, damages applied to battery modules facing thereto or other electrical components can be reduced.

Meanwhile, within the venting unit 500, the discharge path of gas or flame F formed by the internal passage 510 may extend while being bent at a plurality of portions. Specifically, the venting unit 500 may include an internal passage 510, that is, at least one partition portion 530 forming a discharge path of gas or flame F, and a path formed by the internal passage 510 may be extended while being bent at a plurality of portions by the partition portion 530. That is, the gas or flame F may move along a meandering path by the partition portion 530. One surface of the partition portion 530 may be perpendicular to one surface of the venting unit 500. In one example, as shown in Fig. 8, one surface of the partition portion 530 may be perpendicular to one side surface 500-5 of the venting unit 500.

The number or position of the partition portion 530 are not particularly limited as long as the path formed by the internal passage 510 can be configured to be bent. In one example, four partition portions 530 are provided in Figs. 8 and 9. Two meandering flame F discharge paths extending from each of the two venting holes 410H and 420H through the four partition portions 530 can be realized.

The partition portion 530 is disposed as described above, so that the internal passage 510, that is, the discharge path of gas or flame F can be set more complicatedly. As the discharge path of the flame F becomes more complicated, it is possible to effectively block the direct discharge of flame F, which has a strong propensity to go straight ahead, to the outside. In other words, considering the nature of flames or sparks which have a strong propensity to go straight ahead and explode instantaneously, if the path of the internal passage 510 is configured to be bent at a plurality of portions rather than straight lines, direct ejection of flame F can be effectively limited, rather than having no significant effect on gas emissions. In addition, since the path on which flame F moves becomes longer, the flame F may weaken or extinguish during movement. That is, the smothering extinguishment effect can be increased. According to the present embodiment, the venting unit 500 to which the partition portion 530 is added can have a more enhanced fire extinguishing function.

Meanwhile, as a comparative example with respect to the present disclosure, there may be a form wherein separate flame discharge paths are provided on the end plates themselves of the battery module. Unlike the present embodiment in which a flame discharge path is provided in the venting unit 500 located on the side surface portion 210b of the module frame 200, when the flame discharge path is provided on the end plate itself, the path that the flame moves must be short, and the amount of flame that can move must be limited. Since the path is short and the amount of movement is limited, the smothering extinguishing effect is insignificant compared to the present embodiment. That is, there is a high possibility that the generated flame will not be weakened or extinguished, and will be ejected to the outside of the battery module. Unlike the same, the venting unit 500 according to the present embodiment has an advantage that it can form a flame discharge path having a sufficient length and movement amount.

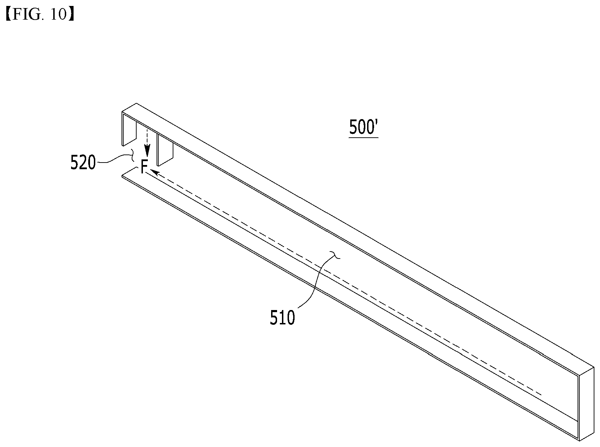

Fig. 10 is a perspective view showing a venting unit according to a modified embodiment of the present disclosure.

Referring to Fig. 10, a venting unit 500' according to a modified embodiment of the present disclosure is connected with an internal passage 510 and an outlet port 520 connected to the internal passage 510 and opened on one side, similarly to the venting unit 500 described above. However, the path formed by the internal passage 510 may extend to a straight line. That is, unlike the case where the venting unit 500 in Fig. 8 implements a path bent through the plurality of partition portions 530, the venting unit 500' is configured such that flame F can extend along a straight line path. The venting unit 500' according to the present embodiment is designed so as to discharge the flame F more quickly.

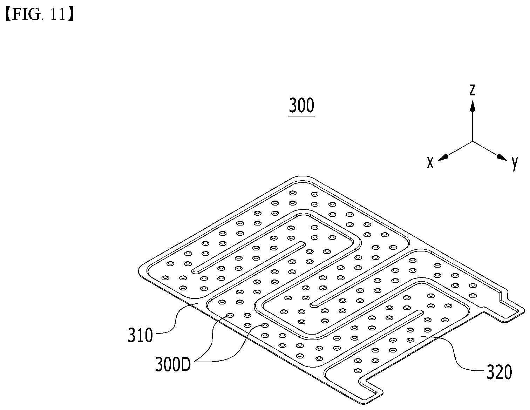

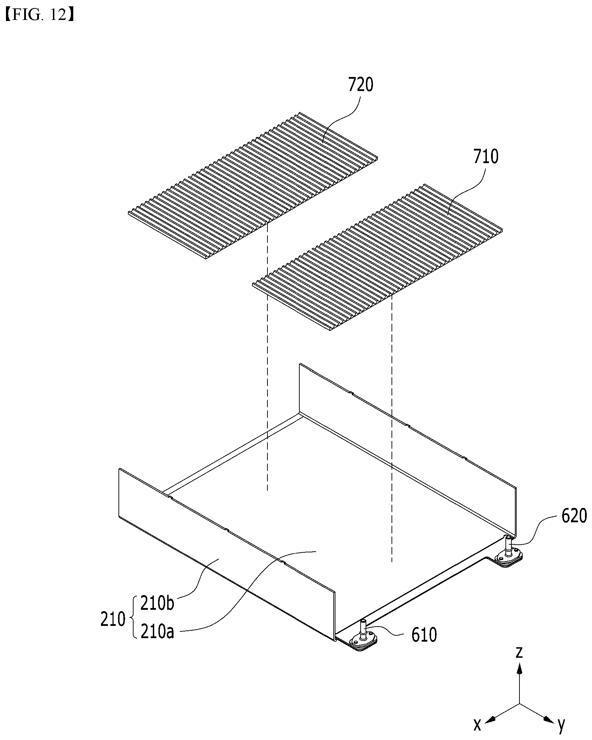

Next, a heat sink and a thermal conductive resin layer according to one embodiment of the present disclosure will be described in detail with reference to Figs. 11 and 12.

Fig. 11 is a perspective view showing a heat sink included in the battery module of Fig. 5.

Referring to Figs. 5 and 11 together, the battery module 100a according to one embodiment of the present disclosure may further include a heat sink 300 located under the lower frame 210. The heat sink 300 is a member through which a refrigerant flows, and may be disposed for cooling the battery cell stack 120. Meanwhile, the refrigerant is a medium for cooling, and is not particularly limited, but may be cooling water. That is, the battery module according to the present embodiment may have a water-cooled cooling structure.

Specifically, the heat sink 300 according to the present embodiment may be located below the bottom portion 210a of the lower frame 210. A refrigerant flow path is formed between the heat sink 300 and the bottom portion 210a of the lower frame 210.

The heat sink 300 may include a lower plate 310 joined to the bottom portion 210a of the lower frame 210 and a recessed portion 320 that is recessed downward from the lower plate 310. The lower plate 310 forms the skeleton of the heat sink 300 and can be directly joined to the bottom portion 210a of the lower frame 210 by a welding method.

The recessed portion 320 is a portion recessed downward, and may be a tube having a U-shaped cross section cut along an xz plane or an yz plane perpendicular to the direction in which the refrigerant flow path extends, and a bottom portion 210a may be located on the opened upper side of the U-shaped tube. The space between the recessed portion 320 and the bottom portion 210a becomes a region where the refrigerant flows, that is, a passage of the refrigerant. Thereby, the bottom portion 210a of the lower frame 210 may directly contact with the refrigerant. The refrigerant flowing in through the refrigerant inlet port 610 (see Fig. 12) may flow along the path formed by the recessed portion 320 and then be discharged through the refrigerant outlet port 620 (see Fig. 12).

Meanwhile, a protrusion pattern 300D that protrudes upward may be formed in the recessed portion 320. In the case of a large-area battery module in which the number of battery cells stacked increases more than before as in the battery cell stack 120 according to the present embodiment, the width of the refrigerant flow path may be formed wider, so that temperature deviation may be more excessive. The protrusion pattern 300D generates the effect of substantially reducing the width of the cooling flow path, thereby capable of minimizing the pressure drop and at the same time, reducing the temperature deviation between the widths of the refrigerant flow paths. Therefore, a uniform cooling effect for the battery cell stack 120 can be realized.

Fig. 12 is a perspective view showing a lower frame, a first thermal conductive resin layer, and a second thermal conductive resin layer included in the battery module of Fig. 5.

Referring to Figs. 5 and 12, the battery module 100a according to the present embodiment may further include a first thermal conductive resin layer 710 and a second thermal conductive resin layer 720 that are located between the lower surface of the battery cell stack 120 and the bottom portion 210a of the lower frame 210.

The first thermal conductive resin layer 710 and the second thermal conductive resin layer 720 may include a thermal conductive resin. The thermal conductive resin can be applied to the bottom portion 210a of the lower frame 210 to form a first thermal conductive resin layer 710 and a second thermal conductive resin layer 720. The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 120. Further, since the thermal conductive resin has excellent heat transfer properties, it is possible to quickly transfer the heat generated in the battery module 110 to the outside of the battery module 100a and thus prevent the battery module from overheating.

The first thermal conductive resin layer 710 and the second thermal conductive resin layer 720 may be located to be spaced apart from each other in a direction parallel to the direction in which the electrode leads 111 and 112 protrude. As described above, in the battery cell stack 120, the electrode leads 111 and 112 may protrude in the y-axis direction and the -y-axis direction, respectively. The first thermal conductive resin layer 710 and the second thermal conductive resin layer 720 may be located to be spaced apart from each other along the y-axis in accordance with the protruding directions of the electrode leads 111 and 112. Particularly, the first thermal conductive resin layer 710 and the second thermal conductive resin layer 720 may be located so as to be adj acent to both sides facing each other at the bottom portion 210a of the lower frame 210, respectively.

The battery module 100a according to the present embodiment attempted to concentrate the cooling function and eliminate the temperature deviation of the battery cell 110 by providing the first thermal conductive resin layer 710 and the second thermal conductive resin layer 720 in a portion where heat generation is excessive in the battery cell 110. Thereby, in the battery module 100a according to the present embodiment, heat dissipation can be effectively made at both ends of the battery cell 110 where heat generation is excessive, and the temperature deviation between the respective portions of the battery cell 110 can be minimized.

Specifically, the heat generated at both ends of the battery cell 110 where heat generation is excessive is sequentially discharged to the outside through the first thermal conductive resin layer 710 or the second thermal conductive resin layer 720, the bottom portion 210a of the lower frame 210 and the heat sink 300.

Meanwhile, in the central portion where the heat generation of the battery cell 110 is relatively weak, the thermal conductive resin is not applied, and thus a kind of air layer may be formed between the battery cell 110 and the bottom portion 210a of the lower frame 210. The air layer can function as a heat insulating layer, which can relatively limit heat discharge.

As described above, the degrees of heat discharge for each of the portion where heat generation of the battery cell 110 is excessive and the portion where the heat generation is insufficient are designed in a different manner, thereby attempting to solve the temperature deviation between portions of the battery cell 110.

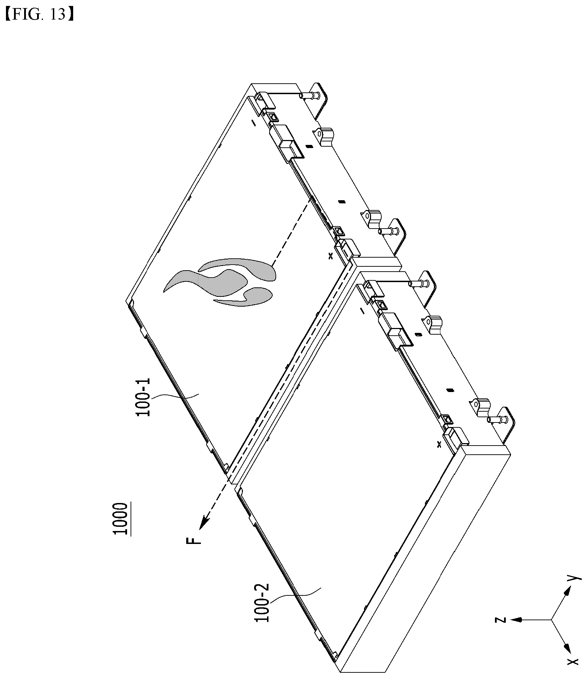

Fig. 13 is a perspective view showing a battery pack according to one embodiment of the present disclosure.

Referring to Figs. 5 and 13, the battery pack 1000 according to one embodiment of the present disclosure may include battery modules 100-1 and 100-2. The battery modules 100-1 and 100-2 may be configured in plural numbers, and each may include a venting unit 500.

When flames F occur in any one battery module 100-1, flames F may be flowed into the venting unit 500 and discharged to the outside of the battery module 100-1. Even if the flames F are generated inside any one battery module 100-1, it is possible to suppress or delay propagation of flames to other adjacent battery modules 100-2. Particularly, when the battery pack 1000 according to the present embodiment is arranged in a vehicle, the propagation of flames F can be delayed, and a time margin for a driver to evacuate from a fire or explosion can be secured.

Next, a battery module 100b according to another embodiment of the present disclosure will be described.

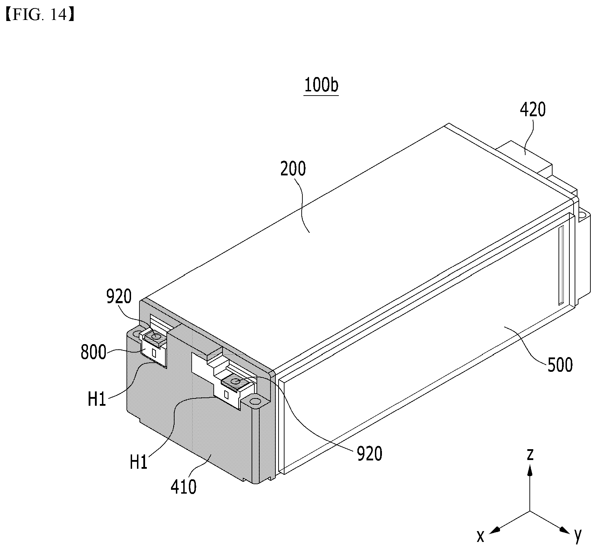

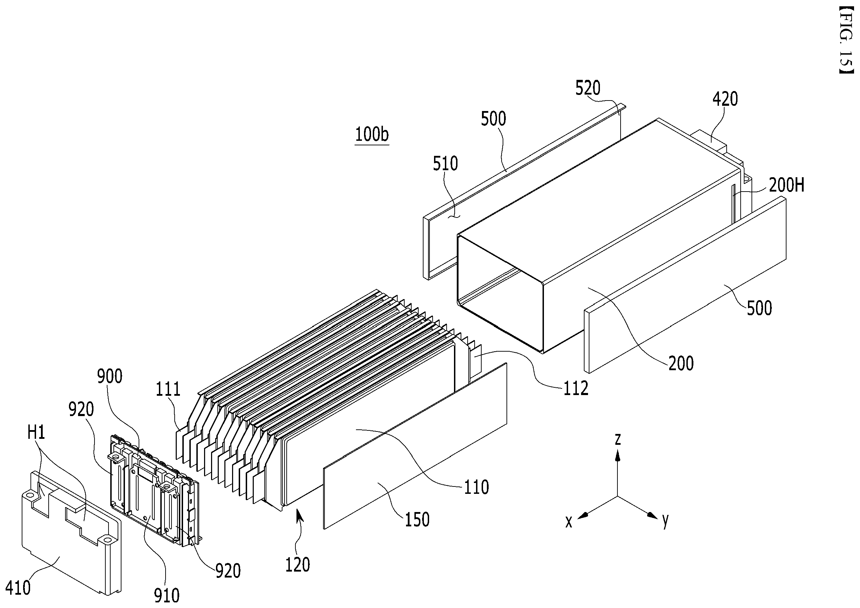

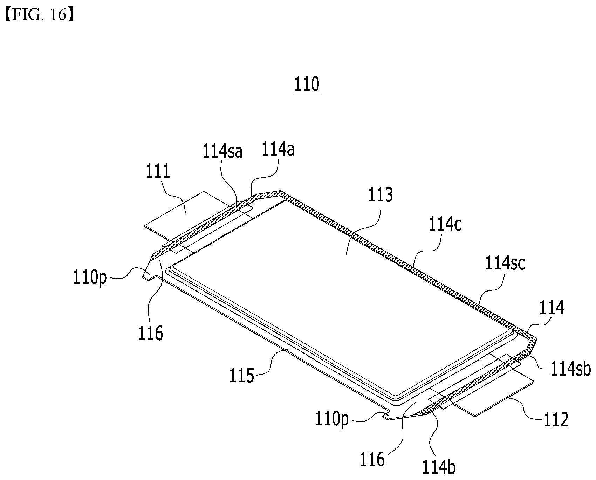

Fig. 14 is a perspective view showing a battery module according to another embodiment of the present disclosure. Fig. 15 is an exploded perspective view of the battery module of Fig. 14. Fig. 16 is a perspective view of one of the battery cells included in the battery module of Fig. 15.

Referring to Figs. 14 and 15, the battery module 100b according to one embodiment of the present disclosure includes a battery cell stack 120 in which a plurality of battery cells 110 are stacked; a module frame 200 that houses the battery cell stack 120; and end plates 410 and 420 that cover a front surface and a rear surface of the battery cell stack 120. More specifically, the battery module 100b may further include a first end plate 410 that cover the front surface of the battery cell stack 120 and a second end plate 420 that cover the rear surface of the battery cell stack 120.

Meanwhile, a busbar frame 900 may be located at least one of between the battery cell stack 120 and the first end plate 410 or between the battery cell stack 120 and the second end plate 420. The busbars 910 and 920 may be mounted on the busbar frame 900.

The battery cells 110 according to the present embodiment can be provided in a pouch shape in which the number of cells stacked per unit area can be maximized. The battery cell 110 provided in the pouch shape can be manufactured by housing an electrode assembly including a cathode, an anode, and a separator in a cell case 114 of a laminate sheet and then heat-sealing the sealing portion of the cell case 114. However, it will be obvious that the battery cell 110 need not be essentially provided in a pouch shape, and can be provided in a square, cylindrical, or other various forms, at a level where the storage capacity required by the device to be mounted in the future is achieved.

Referring to Fig. 16, the battery cell 110 may include two electrode leads 111 and 112. The electrode leads 111 and 112 may have a structure protruding from one end of the cell main body 113, respectively. Specifically, one end of respective electrode leads 111 and 112 is located inside the battery cell 110 and thus is electrically connected to the cathode or anode of the electrode assembly, and the other end of the respective electrode leads 111 and 112 is protruded to the outside of the battery cell 110, and thus can be electrically connected with a separate member, for example, busbars 910 and 920.

The electrode assembly in the cell case 114 can be sealed by the sealing portions 114sa, 114sb and 114sc. The sealing portions 114sa, 114sb and 114sc of the cell case 114 may be located on both ends 114a and 114b and one side portion 114c connecting them.

The cell case 114 is generally formed of a laminated structure of a resin layer/metallic thin film layer/resin layer. For example, when a surface of the cell case is formed of an O(oriented)-nylon layer, it tends to slide easily by an external impact when stacking a plurality of battery cells 110 in order to form a medium or large-sized battery module 100b. Therefore, in order to prevent this sliding and maintain a stable stacking structure of the battery cells 110, an adhesive member, for example, a sticky adhesive such as a double-sided tape or a chemical adhesive coupled by a chemical reaction upon adhesion, can be adhered to the surface of the battery case 114 to form a battery cell stack 120.

A connection portion 115 may refer to a region extending along the longitudinal direction at one end of the cell case 114 in which the above-mentioned sealing portions 114sa, 114sb and 114sc are not located. A bat-ear110p of the battery cell 110 may be formed at an end of the connection portion 115. Further, a terrace portion 116 may refer to a region between electrode leads 111 and 112 in which a part protrudes to the outside of the cell case 114, and the cell main body 113 located inside the cell case 114, on the basis of the edge of the cell case 114.

Meanwhile, the battery cell 110 provided in the pouch type may have a length, a width and a thickness, and the longitudinal direction, the width direction, and the thickness direction of the battery cell 110 may be a direction perpendicular to each other.

Here, the longitudinal direction of the battery cell 110 may be defined in accordance with the direction in which the electrode leads 111 and 112 protrude from a cell case 114. The longitudinal direction of the battery cell 110 may be defined as an x-axis direction or a -x-axis direction.

Also, the width direction of the battery cell 110 herein may be a z-axis direction or a -z-axis direction from one side portion 114c of battery cell 110 to a connection portion 115 or from the connection portion 115 to the one side portion 114c of the battery cell 110 as shown in Fig. 15. Further, the thickness direction of the battery cell 110 herein may be defined as a y-axis direction or a -y-axis direction perpendicular to the width direction and the length direction.

The battery cell stack 120 may be one in which a plurality of electrically connected battery cells 110 are stacked along one direction. A direction in which the plurality of battery cells 110 are stacked (hereinafter referred to as a 'stacking direction') may be a y-axis direction as shown in Figs. 14 and 15 (or it may be a -y-axis direction, and in the following, the expression 'axial direction' may be interpreted as including all +/- directions).

Here, a direction in which the battery cell stack 120 heads from the front surface to the rear surface, or a backward direction thereof may be defined as the longitudinal direction of the battery cell stack 120, which may be an x-axis direction. Further, a direction in which the battery cell stack 120 heads from the upper surface to the lower surface, or a backward direction thereof may be defined as the width direction of the battery cell stack 120, which may be a z-axis direction

The longitudinal direction of the battery cell stack 120 may be substantially the same as the longitudinal direction of the battery cells 110. At this time, the electrode leads 111 and 112 of the battery cells 110 may be located on the front surface and the rear surface of the battery cell stack 120. At this time, the busbars 910 and 920 of the battery module 100b may be arranged close to the front surface and the rear surface of the battery cell stack 120 so as to easily form an electrical connection with the electrode leads 111 and 112.

The module frame 200 may be for protecting the battery cell stack 120 and the electrical components connected thereto from external physical impacts. The module frame 200 may be housed in the internal space of the battery cell stack 120 and the electric device module frame 200 connected thereto. Here, the module frame 200 includes an inner surface and an outer surface, and the inner space of the module frame 200 may be defined by the inner surface.

The module frame 200 may have various structures. In one example, the structure of the module frame 200 can be a mono frame structure. Here, the mono frame may be in a metal plate shape in which the upper surface, the lower surface and both side surfaces are integrated. The mono frame can be manufactured by extrusion molding. In another example, the structure of the module frame 200 may be a structure in which a U-shaped frame and an upper plate are coupled. In the case of a structure in which the U-shaped frame and the upper plate are coupled, the structure of the module frame 200 may be formed by coupling the upper plate to the upper side surfaces of the U-shaped frame, which is a metal plate material in which the lower surface and both side surfaces are coupled or integrated. Each frame or plate can be manufactured by press molding. Further, the structure of the module frame 200 can be provided in the structure of an L-shaped frame in addition to the mono frame or the U-shaped frame, and may be provided in various structures that are not described in the above-mentioned examples.

The structure of the module frame 200 may be provided in a shape that is opened along the longitudinal direction of the battery cell stack 120. The front surface and the rear surface of the battery cell stack 120 may not be covered by the module frame 200. The electrode leads 111 and 112 of the battery cells 110 may not be covered by the module frame 200. The front surface and the rear surface of the battery cell stack 120 may be covered by the busbar frame 900, the end plates 410 and 420, the busbars 910 and 920, or the like, which will be described later. Thereby, the front surface and the rear surface of the battery cell stack 120 can be protected from external physical impacts and the like.

Meanwhile, a compression pad 150 may be located between the battery cell stack 120 and one side surface of the inner surface of the module frame 200. At this time, the compression pad 150 may be located on the y-axis of the battery cell stack 120, and may face at least one surface of the two battery cells 110 at both ends of the battery cell stack 120.

Further, although it is not shown in the figure, a thermal conductive resin may be injected between the battery cell stack 120 and the inner surface of the module frame 200, and a thermal conductive resin layer (not shown) may be formed between the battery cell stack 120 and the inner surface of the module frame 200 through the injected thermal conductive resin. At this time, the thermal conductive resin layer may be located on the z-axis of the battery cell stack 120, and the thermal conductive resin layer may be formed between the battery cell stack 120 and the bottom surface (or may be referred to as a bottom portion) located on the -z axis of the module frame 200.

The busbar frame 900 can be located on one surface of the battery cell stack 120 to cover one surface of the battery cell stack 120 and, at the same time, guide the connection between the battery cell stack 120 and an external device. The busbar frame 900 may be located on the front surface or the rear surface of the battery cell stack 120. At least one of the busbars 910 and 920 and the module connector may be mounted on the busbar frame 900. As a specific example, referring to Figs. 14 and 15, one surface of the busbar frame 900 is connected with the front surface or the rear surface of the battery cell stack 120, and the other surface of the busbar frame 900 may be connected with the busbars 910 and 920.

The busbar frame 900 may include an electrically insulating material. The busbar frame 900 can restrict the busbars 910 and 920 from making contact with other parts of the battery cells 110, except the portions where they are joined to the electrode leads 111 and 112, and can prevent the occurrence of an electrical short circuit.

Although it is not shown in the figure, the busbar frame 900 may be formed in two numbers, and may include a first busbar frame (may be referred to as drawing number 900) located on the front surface of the battery cell stack 120 and a second busbar frame (not shown) located on the rear surface of the battery cell stack 120.

The end plates 410 and 420 can be for protecting the battery cell stack 120 and electrical components connected thereto from external physical impacts by sealing the opened surface of the module frame 200. For this purpose, the end plates 410 and 420 may be made of a material having a predetermined strength. For example, the end plates 410 and 420 may include a metal such as aluminum.

The end plates 410 and 420 may be coupled (joined, sealed or closed) to the module frame 200 while covering the busbar frame 900 located on one surface of the battery cell stack 120. Each edge of the end plates 410 and 420 may be coupled to a corresponding edge of the module frame 200 by a method such as welding. Further, an insulating cover 800 for electrical insulation may be located between the end plates 410 and 420 and the busbar frame 900. The insulating cover 800 may be located on the inner surface of the end plates 410 and 420 and may be brought into close contact with the inner surface of the end plates 410 and 420, but this is not always the case.

As described above, the end plates 410 and 420 may be formed in two numbers, wherein a first end plate 410 may be located on the front surface of the battery cell stack 120 and a second end plate 420 may be located on the rear surface of the battery cell stack 120.

The first end plate 410 can be coupled with the module frame 200 while covering the first busbar frame on the front surface of the battery cell stack 120, and the second end plate 420 can be coupled with the module frame 200 while covering the second busbar frame.

The busbars 910 and 920 may be mounted on one surface of the busbar frame 900, and may be for electrically connecting the battery cells 110 and an external device circuit. The busbars 910 and 920 can be electrically connected to the battery cell stack 120 through the electrode leads 111 and 112 of the battery cells110. Specifically, the electrode leads 111 and 112 of the battery cells 110 pass through a slit formed in the busbar frame 900 and then are bent to be connected to the busbars 910 and 920. The battery cells 110 constituting the battery cell stack 120 can be connected in series or in parallel by the busbars 910 and 920.

The busbars 910 and 920 may include a terminal busbar 920 for electrically connecting one battery module 100b to another battery module 100b. At least a part of the terminal busbar 920 may be exposed to the outside of the end plates 410 and 420 in order to be connected with another external battery module 100b, and the end plates 410 and 420 may be provided with a terminal busbar opening H1 for this purpose.

The terminal busbar 920 may further include a protrusion portion that is protruded upward, unlike other busbars 910, and the protrusion portion may be exposed to the outside of the battery module 100 via a terminal busbar opening H1. The terminal busbar 920 may be connected with another battery module 100b or a BDU (Battery Disconnect Unit) via a protrusion portion exposed through the terminal busbar opening H1, and may form a high voltage (HV) connection with them.

Although it is not shown in the figure, the battery module 100b may include a sensing member that can detect and control phenomena such as overvoltage, overcurrent, and overheating of the battery cell 110. The sensing member may include a temperature sensor for detecting the temperature inside the battery module, a sensing terminal for sensing the voltage value of the busbars 910 and 920, a module connector for transmitting the collected data to an external controller and receiving a signal from the external controller, and/or a connection member for connects them.

Here, the connection member may be arranged in a form extending along the longitudinal direction from the upper surface of the battery cell stack 120. The connection member may be a flexible printed circuit board (FPCB) or a flexible flat cable (FFC).

Further, the module connector herein may transmit data obtained from the temperature sensor and/or the sensing terminal to a BMS (Battery Management System), and the BMS may control charging and discharging of the battery cells 110 based on the collected voltage data. The module connector may be mounted on the busbar frame 900 described above. At least a part of the module connector may be exposed to the outside of the end plates 410 and 420, and the end plates 410 and 420 may be provided with a module connector opening (not shown) for that purpose. In this manner, the end plates 410 and 420 may be formed with the terminal busbar opening H1 and the module connector opening, etc. which may be collectively referred to as 'openings'.

Meanwhile, as described above, an ignition phenomenon may occur inside the battery module 100b in which the battery cells 110 are stacked at a high density. When an ignition phenomenon occurs in one battery module 100b, gas or the like is discharged through the above-mentioned 'opening' so that the terminal busbar 920 or the module connector is damaged, or heat, gas, flame and the like of the battery module 100b are transferred to the battery module 100b adjacent thereto, which causes a problem that a continuous ignition phenomenon occurs.

Therefore, the venting hole 200H and the venting unit 500 that can eliminate the above-mentioned ignition phenomenon and thus improve the durability and stability of the battery module 100b will be described below.

Referring to Figs. 14 and 15 again, the venting hole 200H of the present embodiment may be for communicating the inside of the battery module 100b sealed by the module frame 200, the end plates 410 and 420 or the like with the outside of the battery module 100b. The venting hole 200H may be for discharging heat, gas, flame or the like generated when ignition occurs inside the battery module 100b to the outside of the battery module 100b.

The venting hole 200H may be formed in at least one of the module frame 200, the first end plate 410 and the second end plate 420. The venting hole 200H according to the present embodiment as shown in Figs. 14 and 15 may be formed in the module frame 200. The venting hole 200H may be a hole that communicates a venting hole inlet port formed on the inner surface of the module frame 200 and a venting hole outlet port formed on the outer surface of the module frame 200.

The venting hole 200H may be formed on at least one surface of the module frame 200. For example, as shown in Fig. 15, when the two surfaces on the x-axis of the module frame 200 are in an open state, the venting hole 200H may be formed on at least one surface of the module frame 200 of two surfaces disposed to face each other on the y-axis and two surfaces disposed to face each other on the z-axis. Here, two surfaces facing each other on the y-axis of the module frame 200 may be referred to as side surfaces of the module frame 200. Two surfaces facing each other on the z-axis of the module frame 200 may be referred to as an upper surface or a lower surface (bottom surface or bottom portion) of the module frame 200. Here, the side surface of the module frame 200 may be a surface extending along the width direction or longitudinal direction of the battery cell stack 120, and the upper surface or lower surface of the module frame 200 may be a surface extending along the stacking direction or the longitudinal direction of the battery cell stack 120.

The venting holes 200H may be formed at both ends on the x-axis of the module frame 200, that is, at positions near the front surface or rear surface of the battery cell stack 120. The venting hole 200H may be formed at a position near the busbars 910 and 920 or the module connector. When heat, gas, flame or the like inside the battery module 100b is discharged through the venting hole 200H before being transferred to the busbars 910 and 920, it is possible to minimize the amount of gas discharged through the opening, and to prevent the busbars 910 and 920 or the module connector from being damaged by heat or the like.

The venting hole 200H may have various shapes. For example, as shown in Fig. 15, the venting hole 200H can be provided in the form of a narrow and long slit. When the venting hole 200H is provided in the form of a narrow and long slit, the discharge path switching by the venting unit 500, which will be described later, can be achieved more easily.

The number of venting holes 200H may be one or more. For example, as shown in Fig. 15, one venting hole 200H may be provided on one surface of the module frame 200. In addition, a plurality of venting holes 200H may be provided on one surface of the module frame 200.

Meanwhile, when heat, gas, flame or the like inside the battery module 100b are indiscriminately discharged through the venting hole 200H, the discharged gas or the like may induce an ignition phenomenon in an adjacent battery module 100b. Therefore, the battery module 100b of the present embodiment may be preferably provided with a venting unit 500 that guides a discharge path of the gas discharged from the venting hole 200H.

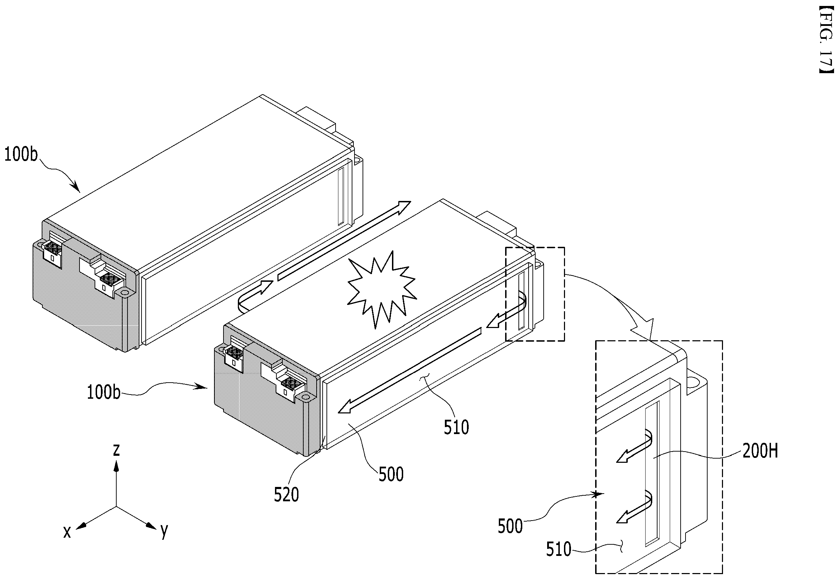

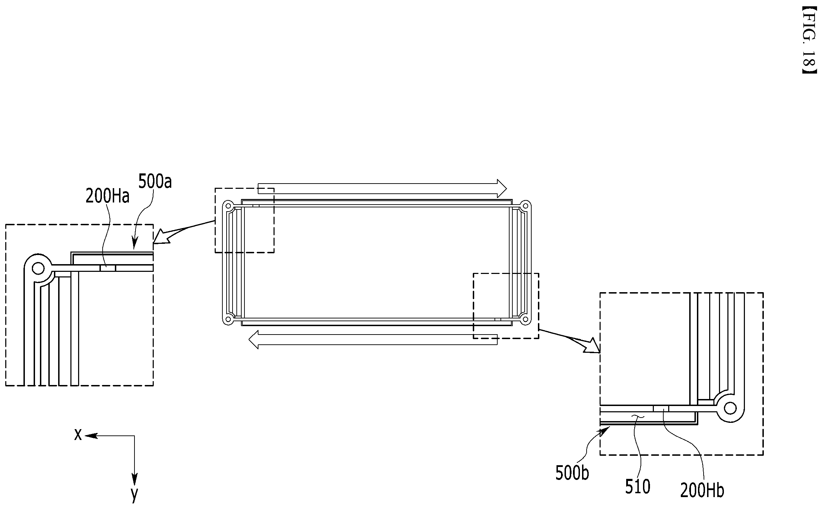

Fig. 17 is a diagram for explaining a gas discharge path when a flame occurs in a battery module according to one embodiment of the present disclosure. Fig. 18 is a plan view of the battery module of Fig. 17 as viewed from above.

Referring to Figs. 17 and 18, the venting unit 500 of the present embodiment may be mounted on one surface of the module frame 200 in which the venting hole 200H is formed. The venting unit 500 may correspond to at least one venting hole 200H. An internal passage 510 may be provided inside the venting unit 500 so that gas or flame generated inside the battery module can pass through. The internal passage 510 may be connected to the venting hole 200H, and an outlet port 520 connected to the internal passage 510 may be formed on one side of the venting unit 500. In the present embodiment, the internal passage 510 refers to a space provided inside the venting unit 500 and may mean a discharge path of gas or flame F. The venting unit 500 can switch the discharge direction of the gas discharged from the venting hole 200H and control the discharge path of gas.

The vent unit 500 can be mounted so as to cover one surface of the module frame 200. The venting unit 500 is mounted so as to cover the venting hole 200H formed on one surface of the module frame 200, but does not close the opening of the venting hole 200H.

Here, the venting unit 500 may have a rectangular parallelepiped shape having a length, width, and thickness as a whole. An internal passage 510 through which gas or flame moves may be provided therein. The venting unit 500 can switch the direction of gas discharged through the opening without closing the opening of the venting hole 200H through its thickness. As the thickness value of the venting unit 500 increases, the stability or the like of the venting unit 500 can be improved. However, this makes it possible to increase the interval between the battery modules 100b, that is, the size of the battery pack, so that a thickness value of the venting unit 500 may need to be appropriately adjusted.

The venting unit 500 may have one side facing the module frame 200 in the open state, and may be mounted so that its opened surface faces one surface of the module frame 200. Here, the length and width of the venting unit 500 may have similar values to the length and width of the module frame 200, and it may be provided in a form that covers most, i.e., 80% or more, of one surface of the module frame 200. If the width value of the venting unit 500 is small, the gas discharged from the venting hole 200H is located in a narrow space, so that the pressure can increase, and if the length value is small, the gas discharge path may be formed short. Therefore, it may be desirable to form the venting unit 500 as large as possible, but as described above, it should be designed in consideration of an increase in the size of the entire battery pack. However, since this description does not exclude examples in which the venting unit 500 is provided to cover a part of one surface of the module frame 200. Therefore, depending on the design, the venting unit 500 may be provided slightly smaller in length and width than the module frame 200 .

The venting unit 500 may include an outlet port 520 for discharging gas or flame to the outside. The outlet port 520 of the venting unit 500 may be formed on one surface of the venting unit 500. Each surface of the venting unit 500 may be formed as a closed surface other than the surface provided with the above-mentioned outlet port 520, or may be closed by the module frame 200, through which gas or the like that have passed through vent hole 200H can be concentrated toward the open outlet port 520.

For example, as shown in Fig. 17, the gas or flame that has passed through the venting hole 200H can be discharged along the first discharge direction (y-axis direction), collide with one surface of the venting unit 500 located perpendicular to the first discharge direction, then switch to a second discharge direction (x-axis direction) different from the first discharge direction, and move toward the outlet port 520. The venting unit 500 may switch the discharge direction of gas or flame in this way, and may guide the discharge path so that the gas or flame moves in the switched direction. At this time, the first discharge direction may be a direction from the venting hole inlet port of the venting hole 200H toward the venting hole outlet port. Further, at this time, the second discharge direction may be a direction toward the outlet port 520 of the venting unit 500.

Here, the outlet port 520 can be provided in the shape of a hole formed on one surface of the venting unit 500. Further, here, the outlet port 520 may be provided on the entire one surface of the venting unit 500 that is opened by removing one surface of the venting unit 500. If the venting unit 500 is provided with the opened one surface, the size of the outlet port 520 is larger than that provided in the shape of a hole, so that the discharge effect can be improved.

The outlet port 520 may be located at a distance from the venting hole 200H formed in the module frame 200. For example, as shown in Fig. 17, when the venting hole 200H is located close to the front surface/rear surface of the battery cell stack 120, the outlet port 520 may be located close to the rear surface/front surface. The venting hole 200H and the outlet port 520 may be located in mutually opposite directions with respect to the center of the module frame 200. The outlet port 520 may be formed on a surface most spaced apart from the venting hole 200H in the venting unit 500. This is for reducing the energy of gas and the like, and slightly lowering the temperature of gas discharged through the venting unit 500, as the gas discharged through the venting hole 200H moves along the longitudinal direction (x-axis direction) of the venting unit 500. Here, the center of the module frame 200 may mean a point that is separated by the same distance from both ends of the module frame 200 in the longitudinal direction, that is, from the front surface and rear surface. That is, the center of the module frame 200 may mean a point that is spaced apart from the first end plate 410 and the second end plate 420 by the same distance.

A plurality of venting units 500 may be provided in the battery module 100b. For example, when the venting holes 200H are formed on different surfaces of the module frame 200 or in different directions on one surface of the module frame 200, the venting units 500 may be provided in plural numbers so as to correspond to the venting holes 200H formed in different positions.

In a specific example, in the battery module 100b, the electrode leads 111 and 112 located on the front surface and the rear surface of the battery cell stack 120 or the busbars 910 and 920 connected thereto are likely to generate heat, whereby the venting holes 200H can be preferably provided at both ends (front side portion and rear side portion ) of the module frame 200 on the x-axis. Therefore, as shown in Fig. 18, the first venting hole 200Ha and the second venting hole 200Hb may be located at both ends of the module frame 200 on the x-axis, respectively. The first venting unit 500a and the second venting unit 500b may be provided in the module frame 200 so as to correspond to the first venting hole 200Ha and the second venting hole 200Hb.

At this time, the first venting hole 200Ha and the second venting hole 200Hb may be formed on the front side portion and the rear side portion of the module frame 200, respectively, and the outlet ports 520 of the first venting unit 500a and the second venting unit 500b provided corresponding thereto may be located on the rear side portion and the front side portion, respectively. Thereby, the discharge path guided by the first venting unit 500a and the discharge path guided by the second venting unit 500b may face in mutually opposite directions. Here, by changing the position of the outlet port 520, the discharge paths guided by the first vent unit 500a and the second vent unit 500b can be designed so as to face the same direction, but in order to form a long discharge path of gas discharged from respective venting holes 200H, it may be preferable to design the venting unit 500 as shown in Fig. 18.

In another specific example, the first venting hole 200Ha and the second venting hole 200Hb formed on the front side portion and the rear side portion of the module frame 200 may be located on the same surface of the module frame 200, or may be located on different surfaces. For example, as shown in Fig. 18, the first venting hole 200Ha and the second venting hole 200Hb may be formed on two side surfaces of the module frame 200, respectively, whereby the first venting unit 500a and the first and second venting units 500b can also be mounted to the two side surfaces of the module frame 200, respectively. Compared to the case where the two venting holes 200H are formed on one surface, each venting hole 200H can be formed large when located on the two surfaces, respectively, so that discharge of gas can be performed more smoothly.

Meanwhile, in the above-mentioned figures, it has been mainly described that the venting hole 200H is formed on the side surface of the module frame 200, and a venting unit 500 corresponding thereto is mounted on the side surface of the module frame 200, but this is not necessarily the case. The venting hole 200H can be located on one side of the module frame 200 without limitation, and the venting unit 500 can be mounted on one surface of the module frame 200 where the venting hole 200H is formed.

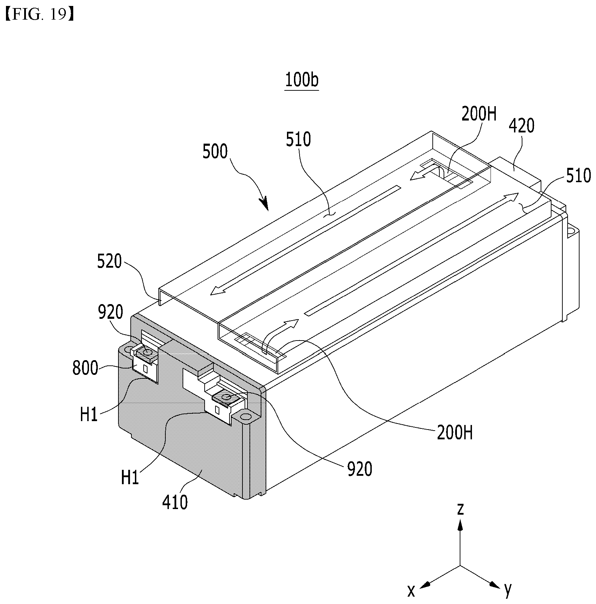

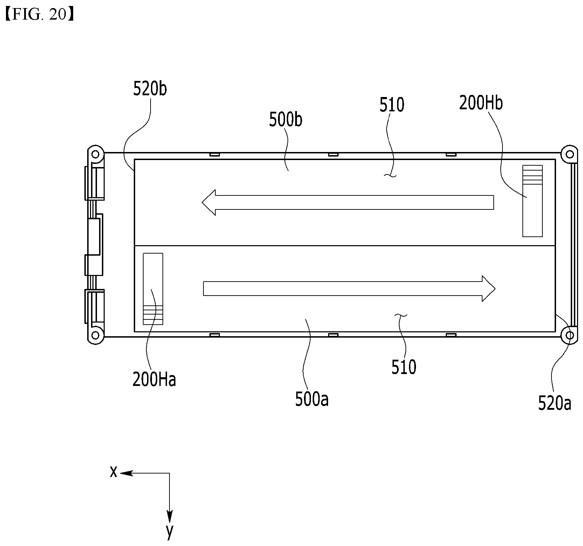

Fig. 19 is a perspective view showing a modification of a battery module according to one embodiment of the present disclosure. Fig. 20 is a plan view of the battery module of Fig. 19 as viewed from above.

Referring to Figs. 19 and 20, the venting hole 200H of the present embodiment may be formed on the upper surface of the module frame 200, and the venting unit 500 corresponding thereto may be mounted on the upper surface of the module frame 200. Since the upper surface of the module frame 200 can face each of the plurality of battery cells 110 stacked side by side along one direction, the venting hole 200H and the venting unit 500 of Fig. 19 may quickly discharge heat, gas, and flame discharged from each battery cell 110 to the outside.

When the venting hole 200H and the venting unit 500 are provided on the upper surface of the module frame 200, the gas that has passed through the venting hole 200H can be discharged along the first discharge direction (z-axis direction), collide with one surface of the venting unit 500 located perpendicular to the first discharge direction, switch to a second discharge direction (x-axis direction) different from the first discharge direction, move along the internal passage 510 and then move toward the outlet port 520. The venting unit 500 may switch the discharge direction of gas or flame in this way and can guide the discharge path of gas or flame.

As described above, the venting holes 200H may be preferably formed at both ends of the x-axis, respectively. The venting hole 200H may be formed on the front side portion and the rear side portion of the upper surface of the module frame 200, respectively. At this time, the first venting unit 500a and the second venting unit 500b can be provided so as to correspond to the first venting hole 200Ha and the second venting hole 200Hb on the upper surface of the module frame 200.

Compared to the two venting holes 200H and the two venting units 500 provided on both side surfaces of the module frame 200, respectively, the sizes of the venting hole 200H and the venting unit 500 of Figs. 19 and 20 may be slightly smaller, the venting hole 200H located on the upper surface of the module frame 200 can quickly discharge heat, gas and flame emitted from the plurality of battery cells 110, so that the difference in effect may be slightly compensated.

Meanwhile, when a thermal runaway phenomenon normally occurs inside the battery module 100b, internal components of the battery module 100b are damaged by heat, gas, or flame, which may cause by-products and harmful materials. When such by-products and harmful materials are discharged to the outside of the battery module 100b, by-products and harmful materials may affect adjacent battery modules 100b or may enter the user's respiratory track, causing health hazard.

The thermal runaway phenomenon inside the battery module 100b mainly occurs around the electrode leads 111 and 112 or the busbars 910 and 920, which are both ends of the battery cell stack 120, and a large number of plastics, FPC wires, battery cell 110 constituent materials, and other composite materials are arranged around the busbars 910 and 920, so that larger particle by-products and harmful materials may occur more frequently elsewhere. Therefore, the venting unit 500 of the present embodiment is preferably provided with a filter 540 to prevent the discharge of such by-products and harmful materials.

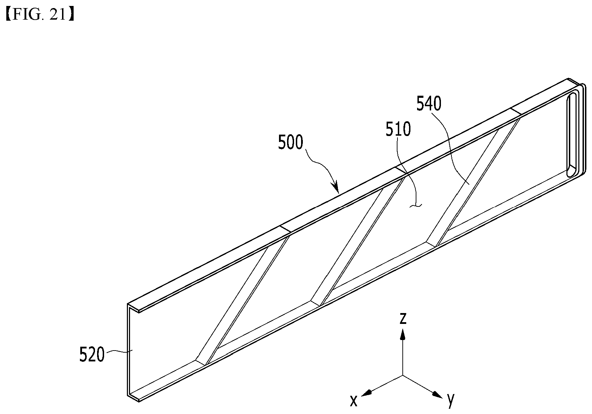

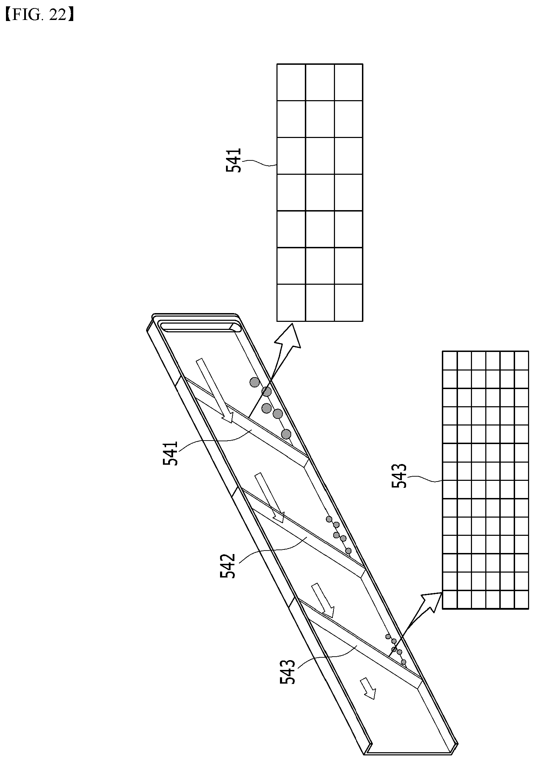

Figs. 21 and 22 are perspective views of an example of a venting unit according to one embodiment of the present disclosure.

Referring to Figs. 21 and 22, a filter 540 may be provided in the venting unit 500 of the present embodiment. The filter 540 may be provided in plural numbers on a discharge path guided by the internal passage 510 of the venting unit 500, and a plurality of filters 540 may be disposed at intervals. The filter 540 may be referred to as a first filter 541, a second filter 542, and a third filter 543 based on the distance from the outlet port 520, and depending on the design, only the first filter 541 may be provided, or only the first filter 541 and the second filter 542 may be provided. In addition, the number of filters 540 provided is not be limited, and depending on the design, a fourth filter, a fifth filter, or other filters may be further provided.

Referring to Fig. 22, a plurality of filters 540 may be provided having mutually different sized pores in order to more effectively filter by-products and harmful materials. Specifically, the pore size of the first filter 541 may be larger than that of the second filter 542, and the pore size of the second filter 542 may be larger than that of the third filter 543. By previously preventing the discharge of relatively large effluents by the first filter 541, the purpose of the filter 540 can be more effectively achieved.

The filter 540 may be made of a material having a melting point higher than a predetermined range so as not to be damaged by discharged gas, flame, and heat. For example, the melting point of the material used to manufacture the filter 540 may be 300°C or more. In other examples, the filter 540 may be made of materials that have different melting points depending on the position provided. Specifically, the melting point of the material used for the first filter 541 is higher than the melting point of the material used for the second filter 542, and the melting point of the material used for second filter 542 may be higher than the melting point of the material used for third filter 543.

The filter 540 can be made of metal. For example, the filter 540 can be provided as a metal sheet.

The filter 540 can be made of a material having heat dissipation performance. For example, the filter 540 can be made of silicon.

The filter 540 can be made of a flame retardant material. For example, the filter 540 includes noncombustible plastics, GFRP (glass fiber reinforced plastics), CFRP (carbon fiber reinforced plastics) and can be provided as a sheet or a mesh.

The filter 540 may include a material having flame extinguishing performance. For example, filter 540 may contain a flame extinguishing agent. For example, the flame extinguishing agent can generate carbon dioxide and water vapor through a thermal decomposition reaction when ignition occurs inside the battery module 100b. The generated carbon dioxide and water vapor can prevent external oxygen from flowing into the battery module 100b, thereby suppressing the flame. The flame extinguishing agent can absorb the heat generated in the battery module by performing a thermal decomposition reaction, which is an endothermic reaction, and external oxygen supply can also be cut off by generating carbon dioxide and water vapor. For example, the filter 540 may include one or more flame extinguishing agents selected from the group consisting of inorganic carbonates, inorganic phosphates, and inorganic sulfates. More specific examples of the flame extinguishing agent material include sodium hydrogen carbonate (NaHCO₃), potassium hydrogen carbonate (KHCO₃), ammonium phosphate (NH₄H₂PO₃), a mixture of "potassium hydrogen carbonate (KHCO₃) and urea ((NH₂)₂CO)", and the like.

Here, the filter 540 may be provided as a metal or plastic mesh, and may be provided so that the pores of the mesh are filled with the flame extinguishing agent, but this is not necessarily the case.

Since the physical properties of the filter 540 are not limited by the above-mentioned examples, the filter 540 can also be made from other materials. In the present embodiment, the filter 540 should be construed as including all materials and shapes that can be provided as a flame extinguishing mesh.

Meanwhile, the venting unit 500 mounted on the battery module 100b may be fixedly coupled to one surface of the module frame 200 through welding or the like, but may also be detachably coupled. The example where the venting unit 500 is mounted on the battery module 100b fixedly is not encompassed by the wording of the claims but is considered as useful for understanding the invention. When the venting unit 500 is detachably coupled, the venting unit 500 may be mounted at a position desired by the user, or the venting unit 500 may be removed as needed. In addition, the venting unit 500 can be easily replaced in response to damage to the venting unit 500, for example, damage to the filter 540 described above.

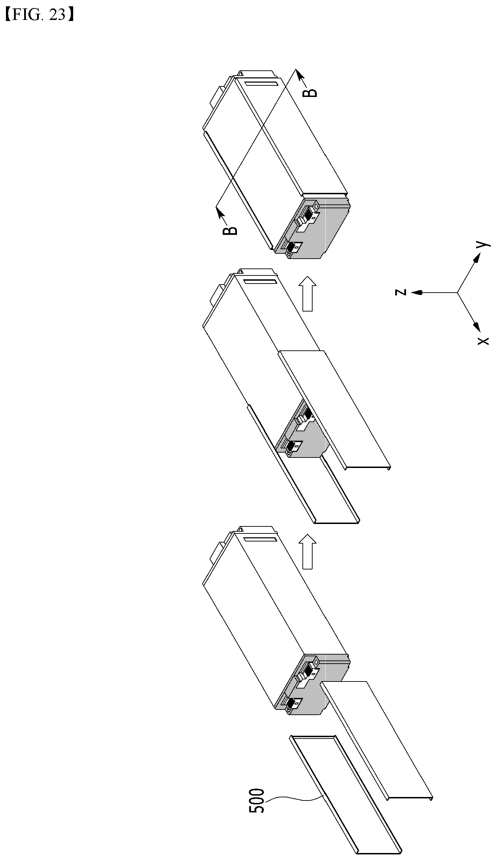

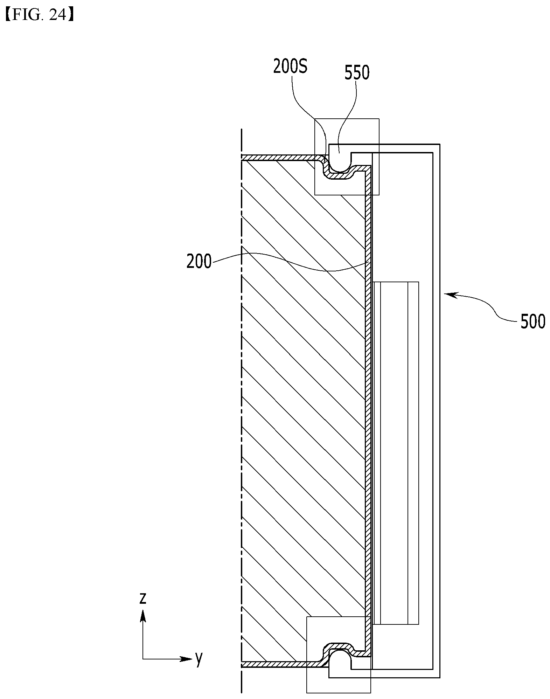

Fig. 23 is a diagram for explaining one coupling method of a vent unit according to one embodiment of the present disclosure. Fig. 24 is a cross-sectional view taken along the line B-B of Fig. 23.

Referring to Figs. 23 and 24, the venting unit 500 of the present embodiment can be coupled to the battery module 100b in a sliding manner. The slot 200S formed in the module frame 200 and the protrusion 550 formed in the venting unit 500 can be coupled with each other to couple the module frame 200 and the venting unit 500 in a sliding manner.

The module frame 200 may include a slot 200S to be connected to the venting unit 500. The slot 200S may be formed to extend along the longitudinal direction of the module frame 200.

The slot 200S may be formed on two surfaces adjacent to one surface of the module frame 200 to which the venting unit 500 is mounted. For example, when the venting unit 500 is mounted on the side surface of the module frame 200, the slot 200S may be formed on the upper surface and the lower surface of the module frame 200. In another example, when the venting unit 500 is mounted on the upper surface of the module frame 200, the slots 200S may be formed on two side surfaces of the module frame 200.

The venting unit 500 may include a protrusion 550 that is housed in the groove of the slot 200S and is slidable in the longitudinal direction along the slot 200S.

The protrusion 550 may be formed on one surface extending from one surface of the venting unit 500 toward the module frame 200. For example, when the venting unit 500 is mounted on the side surface of the module frame 200, the protrusion 550 may be formed on an extended surface that is extended in a direction in which the module frame 200 is located from two surfaces facing each other on the z-axis of the venting unit 500. Here, the extended surface of the venting unit 500 may correspond to a part of the upper surface or lower surface of the module frame 200, and the protrusion 550 may be formed at a position corresponding to the upper surface or lower surface of the module frame 200 among the extended surfaces.

The protrusion 550 may have a shape corresponding to that of the slot 200S. For example, as shown in Fig. 24, if the cross section of the slot 200S has a round shape, the cross section of the protrusion 550 may also have a corresponding rounded shape. Moreover, if the cross section of the slot 200S has an angular shape, the cross section of the protrusion 550 may also have a corresponding angular shape.

In order to prevent the module frame 200 from being separated from the venting unit 500 unlike the user's intention after the sliding coupling, separate members or components may be added to the module frame 200 and the venting unit 500. For example, a hooking part/groove part may be formed at an end of the slot 200S formed in the module frame 200 in the longitudinal direction, and a groove part/locking part may be formed at an end of the protrusion 550 formed in the venting unit 500 in the longitudinal direction. The protrusion 550 of the venting unit 500 is slidable along the slot 200S of the module frame 200, but when the above-mentioned slot 200S reaches the position where the groove part/locking part is formed, the locking part/groove part of the protrusion 550 engages with each other, so that its further movement can be slightly prevented. In another example, the module frame 200 or the venting unit 500 may be further provided with a coupling member preventing relative movement of the two members, and additional movement between the module frame 200 and the venting unit 500 can be prevented by the coupling member.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100a, 100b: battery module
200: module frame
200H: venting hole
410: first end plate
420: second end plate
410H, 420H: venting hole
500: venting unit

## Claims

1. A battery module (100, 100a, 100b) comprising:
a battery cell stack (120) in which a plurality of battery cells (110) are stacked;
a module frame (200) that houses the battery cell stack (120); and
a first end plate (410) and a second end plate (420) each covering a front surface (500-1) and a rear surface (500-2) of the battery cell stack (120),
wherein a venting hole (200H, 410H, 420H) is formed in at least one of the module frame (200), the first end plate (410) or the second end plate (420),
wherein a venting unit (500, 500', 500b) for guiding a discharge path of gas or flame discharged from the venting hole (200H, 410H, 420H) is located on one surface of the module frame (200), and
the venting unit (500, 500', 500b) is mounted so as to cover the venting hole (200H, 410H, 420H), and
the venting unit (500, 500', 500b) is coupled to the module frame (200) in a sliding manner.

2. The battery module (100, 100a, 100b) according to claim 1, wherein:
an internal passage (510) of the venting unit (500, 500', 500b) is connected to the venting hole (200H, 410H, 420H), and
an outlet port (5620) connected with the internal passage (510) is formed on one side of the venting unit (500, 500', 500b).

3. The battery module (100, 100a, 100b) according to claim 1, wherein:
the venting unit (500, 500', 500b) is a frame (210, 900) in the form wherein one side in the direction of the one surface of the module frame (200) is opened.

4. The battery module (100, 100a, 100b) according to claim 1, wherein:
the venting unit (500, 500', 500b) extends along the one surface of the module frame (200) from the first end plate (410) to the second end plate (420).

5. The battery module (100, 100a, 100b) according to claim 1, wherein:
the venting hole (200H, 410H, 420H) is formed in both the first end plate (410) and the second end plate (420), and
an internal passage (510) of the venting unit (500, 500', 500b) is connected with both the venting hole (200H, 410H, 420H) of the first end plate (410) and the venting hole (200H, 410H, 420H) of the second end plate (420).

6. The battery module (100, 100a, 100b) according to claim 1, wherein:
within the venting unit (500, 500', 500b), the discharge path of gas or flame extends while being bent at a plurality of portions (114s, 210, 210b, 530).

7. The battery module (100, 100a, 100b) according to claim 1, wherein:
the venting unit (500, 500', 500b) includes at least one partition portion (530) forming the discharge path of gas or flame, and the one surface of the partition portion (530) is perpendicular to one surface of the venting unit (500, 500', 500b).

8. The battery module (100, 100a, 100b) according to claim 1, wherein:
the venting unit (500, 500', 500b) includes an outlet port (5620) for discharging the gas or flame to the outside,
the venting hole (200H, 410H, 420H) and the outlet port (5620) are located in mutually opposite directions with respect to the center of the module frame (200), and
the center of the module frame (200) is a point that is spaced apart from the first end plate (410) and the second end plate (420) by the same distance.

9. The battery module (100, 100a, 100b) according to claim 1, wherein:
a filter (540, 543) is arranged inside the venting unit (500, 500', 500b).

10. The battery module (100, 100a, 100b) according to claim 1, wherein:
the venting unit (500, 500', 500b) includes a first filter (541) and a second filter (542) located therein,
the first filter (541) and the second filter (542) are disposed at intervals on a discharge path guided by an internal passage (510) of the venting unit (500, 500', 500b), and
a pore size of the first filter (541) and a pore size of the second filter (542) are different from each other.

11. The battery module (100, 100a, 100b) according to claim 1, wherein:
the module frame (200) includes a slot (200S) connected to the venting unit (500, 500', 500b),
the slot (200S) is formed extending along the longitudinal direction of the module frame (200), and the venting unit (500, 500', 500b) is slidable along the slot (200S).

12. The battery module (100, 100a, 100b) according to claim 11 wherein:
the venting unit (500, 500', 500b) includes a protrusion (550) coupled with the slot (200S).

13. The battery module (100, 100a, 100b) according to claim 1, wherein:
the venting unit (500, 500', 500b) includes a first venting unit (500a) and a second venting unit (500b), and
the discharge path guided by the first venting unit (500a) and the discharge path guided by the second venting unit (500b) are in mutually opposite directions.

14. A battery pack (1000) comprising the battery module (100, 100a, 100b) as set forth in claim 1.

## Patentansprüche

1. Batteriemodul (100, 100a, 100b), umfassend:
einen Batteriezellenstapel (120), in dem eine Mehrzahl von Batteriezellen (110) gestapelt sind;
einen Modulrahmen (200), der den Batteriezellenstapel (120) aufnimmt; und
eine erste Endplatte (410) und eine zweite Endplatte (420), die jeweils eine Vorderfläche (500-1) und eine Rückfläche (500-2) des Batteriezellenstapels (120) abdecken,
wobei ein Entlüftungsloch (200H, 410H, 420H) in mindestens einem von dem Modulrahmen (200), der ersten Endplatte (410) oder der zweiten Endplatte (420) ausgebildet ist,
wobei sich eine Entlüftungseinheit (500, 500', 500b) zum Führen eines Austrittspfads von aus dem Entlüftungsloch (200H, 410H, 420H) austretendem Gas oder austretender Flamme auf einer Fläche des Modulrahmens (200) befindet und
die Entlüftungseinheit (500, 500', 500b) so montiert ist, dass sie das Entlüftungsloch (200H, 410H, 420H) abdeckt, und
die Entlüftungseinheit (500, 500', 500b) in gleitender Weise mit dem Modulrahmen (200) gekoppelt ist.

2. Batteriemodul (100, 100a, 100b) nach Anspruch 1, wobei:
ein innerer Durchgang (510) der Entlüftungseinheit (500, 500', 500b) mit dem Entlüftungsloch (200H, 410H, 420H) verbunden ist und
eine Auslassöffnung (5620), die mit dem inneren Durchgang (510) verbunden ist, an einer Seite der Entlüftungseinheit (500, 500', 500b) ausgebildet ist.

3. Batteriemodul (100, 100a, 100b) nach Anspruch 1, wobei:
die Entlüftungseinheit (500, 500', 500b) ein Rahmen (210, 900) in der Form ist, bei der eine Seite in Richtung der einen Fläche des Modulrahmens (200) geöffnet ist.

4. Batteriemodul (100, 100a, 100b) nach Anspruch 1, wobei:
sich die Entlüftungseinheit (500, 500', 500b) entlang der einen Fläche des Modulrahmens (200) von der ersten Endplatte (410) bis zu der zweiten Endplatte (420) erstreckt.

5. Batteriemodul (100, 100a, 100b) nach Anspruch 1, wobei:
das Entlüftungsloch (200H, 410H, 420H) sowohl in der ersten Endplatte (410) als auch in der zweiten Endplatte (420) ausgebildet ist und
ein innerer Durchgang (510) der Entlüftungseinheit (500, 500', 500b) sowohl mit dem Entlüftungsloch (200H, 410H, 420H) der ersten Endplatte (410) als auch mit dem Entlüftungsloch (200H, 410H, 420H) der zweiten Endplatte (420) verbunden ist.

6. Batteriemodul (100, 100a, 100b) nach Anspruch 1, wobei:
sich innerhalb der Entlüftungseinheit (500, 500', 500b) der Austrittspfad von Gas oder Flamme erstreckt und dabei an einer Mehrzahl von Abschnitten (114s, 210, 210b, 530) gebogen ist.

7. Batteriemodul (100, 100a, 100b) nach Anspruch 1, wobei:
die Entlüftungseinheit (500, 500', 500b) mindestens einen Trennwandabschnitt (530) aufweist, der den Austrittspfad von Gas oder Flamme bildet, und die eine Fläche des Trennwandabschnitts (530) senkrecht zu einer Fläche der Entlüftungseinheit (500, 500', 500b) ist.

8. Batteriemodul (100, 100a, 100b) nach Anspruch 1, wobei:
die Entlüftungseinheit (500, 500', 500b) eine Auslassöffnung (5620) zum Abgeben des Gases oder der Flamme nach außen aufweist,
sich das Entlüftungsloch (200H, 410H, 420H) und die Auslassöffnung (5620) in Bezug auf die Mitte des Modulrahmens (200) in einander entgegengesetzten Richtungen befinden und
die Mitte des Modulrahmens (200) ein Punkt ist, der von der ersten Endplatte (410) und der zweiten Endplatte (420) um den gleichen Abstand beabstandet ist.

9. Batteriemodul (100, 100a, 100b) nach Anspruch 1, wobei:
ein Filter (540, 543) im Inneren der Entlüftungseinheit (500, 500', 500b) angeordnet ist.

10. Batteriemodul (100, 100a, 100b) nach Anspruch 1, wobei:
die Entlüftungseinheit (500, 500', 500b) einen ersten Filter (541) und einen zweiten Filter (542) aufweist, die sich darin befinden,
der erste Filter (541) und der zweite Filter (542) in Abständen auf einem Austrittspfad angeordnet sind, der von einem inneren Durchgang (510) der Entlüftungseinheit (500, 500', 500b) geführt wird, und
eine Porengröße des ersten Filters (541) und eine Porengröße des zweiten Filters (542) voneinander verschieden sind.

11. Batteriemodul (100, 100a, 100b) nach Anspruch 1, wobei:
der Modulrahmen (200) einen Schlitz (200S) aufweist, der mit der Entlüftungseinheit (500, 500', 500b) verbunden ist,
der Schlitz (200S) sich entlang der Längsrichtung des Modulrahmens (200) erstreckend ausgebildet ist und die Entlüftungseinheit (500, 500', 500b) entlang des Schlitzes (200S) verschiebbar ist.

12. Batteriemodul (100, 100a, 100b) nach Anspruch 11, wobei:
die Entlüftungseinheit (500, 500', 500b) einen Vorsprung (550) aufweist, der mit dem Schlitz (200S) gekoppelt ist.

13. Batteriemodul (100, 100a, 100b) nach Anspruch 1, wobei:
die Entlüftungseinheit (500, 500', 500b) eine erste Entlüftungseinheit (500a) und eine zweite Entlüftungseinheit (500b) aufweist und
der von der ersten Entlüftungseinheit (500a) geführte Austrittspfad und der von der zweiten Entlüftungseinheit (500b) geführte Austrittspfad in einander entgegengesetzten Richtungen verlaufen.

14. Batteriepack (1000), umfassend das Batteriemodul (100, 100a, 100b) nach Anspruch 1.

## Revendications

1. Module de batterie (100, 100a, 100b) comprenant :
un empilement de cellules de batterie (120) dans lequel une pluralité de cellules de batterie (110) sont empilées ;
un châssis de module (200) contenant l'empilement de cellules de batterie (120) ; et
une première flasque (410) et une deuxième flasque (420) couvrant chacune une surface antérieure (500-1) et une surface postérieure (500-2) de l'empilement de cellules de batterie (120),
un orifice d'évacuation (200H, 410H, 420H) étant formé dans au moins un des cadres du module (200), de la première flasque (410) ou de la deuxième flasque (420),
un dispositif d'évacuation (500, 500', 500b) pour guider un chemin de décharge du gaz ou de la flamme évacués par l'orifice d'évacuation (200H, 410H, 420H) étant situé sur une surface du châssis du module (200), et
le dispositif d'évacuation (500, 500', 500b) étant monté de façon à couvrir l'orifice d'évacuation (200H, 410H, 420H), et
le dispositif d'évacuation (500, 500', 500b) étant couplé au châssis du module (200) de façon coulissante.

2. Module de batterie (100, 100a, 100b) selon la revendication 1,
un passage interne (510) du dispositif d'évacuation (500, 510', 500b) étant connecté à l'orifice d'évacuation (200H, 410H, 420H), et
un orifice de sortie (5620) relié au passage interne (510) étant formé sur un côté du dispositif d'évacuation (500, 500', 500b).

3. Module de batterie (100, 100a, 100b) selon la revendication 1,
le dispositif d'évacuation (500, 500', 500b) étant un châssis (210, 900) dans la forme, dont un côté dans la direction de l'une surface du châssis du module (200) est ouvert.

4. Module de batterie (100, 100a, 100b) selon la revendication 1,
le dispositif d'évacuation (500, 500', 500b) s'étendant le long de l'une surface du cadre du module (200) de la première flasque (410) à la deuxième flasque (420).

5. Module de batterie (100, 100a, 100b) selon la revendication 1,
l'orifice d'évacuation (200H, 410H, 420H) est formé à la fois dans la première flasque (410) et dans la deuxième flasque (420), et
un passage interne (510) du dispositif d'évacuation (500, 500', 500b) étant relié à la fois à l'orifice d'évacuation (200H, 410H, 420H) de la première flasque (410) et à l'orifice d'évacuation (200H, 410H, 420H) de la deuxième flasque (420).

6. Module de batterie (100, 100a, 100b) selon la revendication 1,
au sein du dispositif d'évacuation (500, 500', 500b), le chemin de décharge du gaz ou de la flamme s'étend tout en étant courbé dans une pluralité de portions (114s, 210, 210b, 530).

7. Module de batterie (100, 100a, 100b) selon la revendication 1,
le dispositif d'évacuation (500, 500', 500b) comprenant au moins une partie de cloisonnement (530) formant le chemin de décharge du gaz ou de la flamme, et l'une surface de la partie de cloisonnement (530) étant perpendiculaire à une surface du dispositif d'évacuation (500, 500', 500b).

8. Module de batterie (100, 100a, 100b) selon la revendication 1,
le dispositif d'évacuation (500, 500', 500b) comprenant un orifice de sortie (5620) pour évacuer le gaz ou la flamme à l'extérieur,
l'orifice d'évacuation (200H, 410H, 420H) et l'orifice de sortie (5620) étant situés dans des directions mutuellement opposées relativement au centre du châssis du module (200), et
le centre du châssis du module (200) étant un point espacé de la première flasque (410) et de la deuxième flasque (420) par la même distance.

9. Module de batterie (100, 100a, 100b) selon la revendication 1,
un filtre (540, 543) étant disposé à l'intérieur du dispositif d'évacuation (500, 500', 500b).

10. Module de batterie (100, 100a, 100b) selon la revendication 1,
le dispositif d'évacuation (500, 500', 500b) comprenant un premier filtre (541) et un deuxième filtre (542) situés à l'intérieur,
le premier filtre (541) et le deuxième filtre (542) étant disposés à des intervalles réguliers sur un chemin de décharge guidé par un passage interne (510) du dispositif d'évacuation (500, 500', 500b), et
la taille des pores du premier filtre (541) et la taille des pores du deuxième filtre (542) étant différentes l'une de l'autre.

11. Module de batterie (100, 100a, 100b) selon la revendication 1,
le châssis du module (200) comprenant une fente (200S) connectée au dispositif d'évacuation (500, 500', 500b),
la fente (200S) étant formée par extension dans la direction longitudinale du châssis du module (200), et le dispositif d'évacuation (500, 500', 500b) pouvant coulisser le long de la fente (200S).

12. Module de batterie (100, 100a, 100b) selon la revendication 11,
le dispositif d'évacuation (500, 500', 500b) comprenant une saillie (550) couplée à la fente (200S).

13. Module de batterie (100, 100a, 100b) selon la revendication 1,
le dispositif d'évacuation (500, 500', 500b) comprenant un premier dispositif d'évacuation (500a) et un deuxième dispositif d'évacuation (500b), et
le chemin de décharge guidé par le premier dispositif d'évacuation (500a) et le chemin de décharge guidé par le deuxième dispositif d'évacuation (500b) suivant des directions mutuellement opposées.

14. Bloc-batterie (1000) comprenant le module de batterie (100, 100a, 100b) selon la revendication 1.
